# EUROPEAN PATENT APPLICATION

(11) **EP 4 851 693 A1**
(43) Date of publication of application: **09.12.2026**
(21) Application number: 25180845.7
(22) Date of filing: 04.06.2025
(51) Int. Cl.: G02B 9/64, G02B 13/00, G02B 27/64, G03B 17/17

(54) **LENS LEAD TELE LENS DESIGN**

(71) Applicant: GOOGLE LLC, Mountain View CA 94043 (US)
(72) Inventor: HUANG, Hai jo, New Taipei City, 220 (TW)
(74) Representative: Marks & Clerk GST

(57) **Abstract**

An example lens includes a plurality of optical elements arranged along an optical axis. The plurality of optical elements includes, in order from an object side to an image side of the lens: a first refractive lens element, a prism, and a first refractive lens element group. The first refractive lens element group includes, in order from the object side to the image side of the lens: a lens element comprising a plastic, and at least two glass lens elements comprising a glass. The plurality of optical elements also includes a second refractive lens element group. Movement of the second lens element group along the optical axis as a group changes a focus of the lens.

## Description

### BACKGROUND

Existing optical systems of cameras in electronic products are trending towards telephoto lens designs having a folded optical path, optical image stabilization, and a shorter shoulder height, e.g., a reduced protrusion from a device surface, while maintaining or improving optical imaging quality for relatively larger sensors. However, cameras with a prism as the leading optical element in the front of the lens may have a relatively higher shoulder height

### SUMMARY

In general, aspects of this disclosure are directed to techniques, systems, and lenses having high quality imaging for high resolution camera systems with relatively large sensors. Lens designs may also have a folded optical path, e.g., utilizing a prism and/or mirror, to satisfy space constraints within a device in one or more directions and to reduce a shoulder height (e.g., a bump height or z-height) from a nominal surface of a device including the camera system and lens. Cameras with a prism as the leading optical element in the front of the lens may present one or more disadvantages, such as relatively high shoulder height.

In accordance with aspects of this disclosure, example lens designs include a prism and a plurality of lens elements. The plurality of lens elements include a plurality of plastic lens elements and at least one glass lens element, and one of the lens elements is positioned on an object side of the prism, e.g., a lens element as the leading optical element. Example camera systems including the example lenses may be configured to perform optical image stabilization (OIS) via rotating and/or translating the prism. The leading optical element may be configured to rotate and/or translate together with the prism in order to maintain a fixed position relative to the prism. Conventional OIS support structures, sensors, and drivers can be effectively utilized with the lens system.

Aspects of this disclosure may provide one or more technical advantages that realize at least one practical application. For example, including a lens element as the leading optical element may reduce the overall total track length (TTL) of the example lenses, and may also reduce the length of the lens along a width of the camera, e.g., from the reflecting surface of the prism to a sensor, while maintaining or improving the imaging quality of the lens, thereby decreasing the space required in a device for a camera or providing an improved lens satisfying space constraints of a camera. Additionally, utilizing one or more glass elements in place of one or more plastic lens elements may provide reduced overall chromatic aberration (axial and/or lateral) of example lenses disclosed herein. The one or more glass lens elements of the example lenses disclosed herein may be spherical lens elements, e.g., having surface shapes that are spherical and are non-aspheric (e.g., without an aspherical curvature). Example lenses disclosed herein may balance lens elements having complex curved shapes, e.g., aspherical surfaces configured to reduce some aberrations and improve lens quality, with lens elements having less complex shapes, e.g., spherical surfaces, but made of materials having less dispersion, so as to provide an improved combination of lens manufacturability and lens performance.

As one example, a lens includes: a plurality of optical elements arranged along an optical axis, wherein the plurality of optical elements comprises, in order from an object side to an image side of the lens: a first refractive lens element; a prism; a first refractive lens element group comprising, in order from the object side to the image side of the lens: a lens element comprising a plastic; and at least two glass lens elements comprising a glass; and a second refractive lens element group, wherein movement of the second lens element group along the optical axis as a group changes a focus of the lens.

As another example, a camera includes: a lens including: a plurality of optical elements arranged along an optical axis, wherein the plurality of optical elements comprises, in order from an object side to an image side of the lens: a first refractive lens element; a prism; a first refractive lens element group comprising, in order from the object side to the image side of the lens: a lens element comprising a plastic; and at least two glass lens elements comprising a glass; and a second refractive lens element group; and a sensor disposed at an image plane of the lens.

As another example, a device includes: a processor; a camera; and a memory comprising instructions executable by the processor to control operations of the cameras, wherein the camera includes: a lens including: a plurality of optical elements arranged along an optical axis, wherein the plurality of optical elements comprises, in order from an object side to an image side of the lens: a first refractive lens element; a prism; a first refractive lens element group comprising, in order from the object side to the image side of the lens: a lens element comprising a plastic; and at least two glass lens elements comprising a glass; and a second refractive lens element group, wherein movement of the second lens element group along the optical axis as a group changes a focus of the lens; and a sensor disposed at an image plane of the lens.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a cross-sectional diagram of an example camera, in accordance with one or more aspects of the present disclosure.
FIG. 2 is a plot of a through focus modulation transfer function of the example camera of FIG. 1, in accordance with one or more aspects of the present disclosure.
FIG. 3 is a plot of an MTF versus image height of the example camera of FIG. 1, in accordance with one or more aspects of the present disclosure.
FIG. 4 is a plot of a distortion of the example camera of FIG. 1, in accordance with one or more aspects of the present disclosure.
FIG. 5 is a plot of a relative illumination of the example camera of FIG. 1, in accordance with one or more aspects of the present disclosure.
FIG. 6 is a cross-sectional diagram of another example camera, in accordance with one or more aspects of the present disclosure.
FIG. 7 is a plot of a through focus modulation transfer function of the example camera of FIG. 6, in accordance with one or more aspects of the present disclosure.
FIG. 8 is a plot of an MTF versus image height of the example camera of FIG. 6, in accordance with one or more aspects of the present disclosure.
FIG. 9 is a plot of a distortion of the example camera of FIG. 6, in accordance with one or more aspects of the present disclosure.
FIG. 10 is a cross-sectional diagram of another example camera, in accordance with one or more aspects of the present disclosure.
FIG. 11 is a plot of a through focus modulation transfer function of the example camera of FIG. 10, in accordance with one or more aspects of the present disclosure.
FIG. 12 is a plot of an MTF versus image height of the example camera of FIG. 10, in accordance with one or more aspects of the present disclosure.
FIG. 13 is a plot of a distortion of the example camera of FIG. 10, in accordance with one or more aspects of the present disclosure.
FIG. 14 is a cross-sectional diagram of another example camera, in accordance with one or more aspects of the present disclosure.
FIG. 15 is a plot of a through focus modulation transfer function of the example camera of FIG. 14, in accordance with one or more aspects of the present disclosure.
FIG. 16 is a plot of an MTF versus image height of the example camera of FIG. 14, in accordance with one or more aspects of the present disclosure.
FIG. 17 is a plot of a distortion of the example camera of FIG. 14, in accordance with one or more aspects of the present disclosure.
FIG. 18 is an example computer system that may be used with a camera including the example lens of FIG. 1, 6, 10 and/or 14, in accordance with one or more aspects of the present disclosure.
FIG. 19 includes Table 1 providing design details of the example camera of FIG. 1, in accordance with one or more aspects of the present disclosure.
FIG. 20 includes Table 2 providing performance and/or quality details of the example camera of FIG. 1, in accordance with one or more aspects of the present disclosure.
FIG. 21 includes Table 3 providing design details of the example camera of FIG. 6, in accordance with one or more aspects of the present disclosure.
FIG. 22 includes Table 4 providing performance and/or quality details of the example camera of FIG. 6, in accordance with one or more aspects of the present disclosure.
FIG. 23 includes Table 5 providing design details of the example camera of FIG. 10, in accordance with one or more aspects of the present disclosure.
FIG. 24 includes Table 6 providing performance and/or quality details of the example camera of FIG. 10, in accordance with one or more aspects of the present disclosure.
FIG. 25 includes Table 7 providing design details of the example camera of FIG. 14, in accordance with one or more aspects of the present disclosure.
FIG. 26 includes Table 8 providing performance and/or quality details of the example camera of FIG. 14, in accordance with one or more aspects of the present disclosure.
FIG. 27 includes Table 9 listing the refractive index for the materials of the lens elements for each of the example lenses of FIGS. 1, 6, 10, and 14 at six wavelengths in the visible wavelength spectrum.

### DETAILED DESCRIPTION

Some camera systems include a telephoto lens including a prism to fold the optical path in order to satisfy space constraints for the lens and, in some examples, to provide optical image stabilization (OIS) via rotation and/or translation of the prism. Some telephoto lens designs include the prism as the front, or leading, optical element, e.g., with further optical elements (e.g., lenses, filters, gratings, and the like) on the image side of the prism between the prism and the sensor. A prism as the front optical element of the lens may be constrained with respect to reduce a shoulder height of the camera (e.g., the amount that at least a portion of the camera system or lens protrudes or extends from a nominal surface of a device, such as a mobile phone, including the camera system) because the object-to-image ray paths pass through the prism first, then through the optical elements having optical power such that the ray paths may not be converged in front of the prism (e.g., on the object side of the prism).

In general, aspects of this disclosure are directed to techniques, systems, lenses, and cameras having high quality imaging for high resolution camera systems with relatively large sensors. In some examples, a lens may be a telephoto lens including a plurality of lens elements. The plurality of lens elements may include a plurality of plastic lens elements and at least one glass lens element.

The lens may also include a prism configured to fold the optical path of the lens and, in some examples, to provide optical image stabilization (OIS). In some examples, the lens may include a lens element positioned on an object side of the prism, e.g., a leading lens element, the leading lens element configured to move with the prism. For example, the leading lens element may be configured to move with the prism to perform OIS, e.g., to rotate and/or translate together with the prism in order to maintain a fixed position relative to the prism.

In some examples, the lens may include at least two glass lens elements. The two glass elements may have opposite dispersion and may be configured to reduce axial and/or lateral color. For example, the glass elements may form a cemented or non-cemented achromatic doublet. In some examples, the glass elements may have spherical surfaces, e.g., surfaces without an aspherical curvature.

The techniques, systems, and lenses of this disclosure may provide one or more technical advantages and solve one or more technical problems. For example, the techniques, systems, and lenses provide a lens having a reduced total track length (TTL), e.g., a TTL of less than or equal to 29 millimeters (mm) while maintaining or improving multiple optical performance metrics, such as axial color, with a relatively larger sensor, e.g., a 1/1.32 inch (1/1.32") sensor. In some examples, aspects of this disclosure may provide a lens with improved cost and reduced complexity to manufacture, e.g., by including glass elements having spherically curved surfaces without aspherical curvature. For example, utilizing one or more glass elements in place of one or more plastic lens elements may provide reduced overall chromatic aberration (axial and/or lateral) of example lenses disclosed herein. The one or more glass lens elements of the example lenses disclosed herein may be spherical lens elements, e.g., having surface shapes that are spherical and are non-aspheric (e.g., without an aspherical curvature). Example lenses disclosed herein may balance lens elements having complex curved shapes, e.g., aspherical surfaces configured to reduce some aberrations and improve lens quality (such as plastic lens elements), with lens elements having less complex shapes, e.g., spherical surfaces, but made of materials having less dispersion (such as glass lens elements), so as to provide an improved combination of lens manufacturability and lens performance.

In some examples, aspects of this disclosure may provide a lens configured to focus objects at a plurality of object distances, e.g., the telephoto lens may focus through a focal range for objects at distances from infinity to a near focus distance, e.g., a macro focus distance such as 30 centimeters or closer. In some examples, the lens may be configured to focus through a focal range by moving only a portion of the plurality of lens elements with a relatively shorter focus stroke length, thereby providing improved lens robustness, e.g., via reducing the chances of the lens elements that are used to move to focus from contacting each other or non-moving components by reducing the number of lens elements that need to move to focus and by reducing the amount that those lens elements need to move. The stroke length may comprise the total axial length of motion of the portion of the plurality of lens element to focus through the entire focal range.

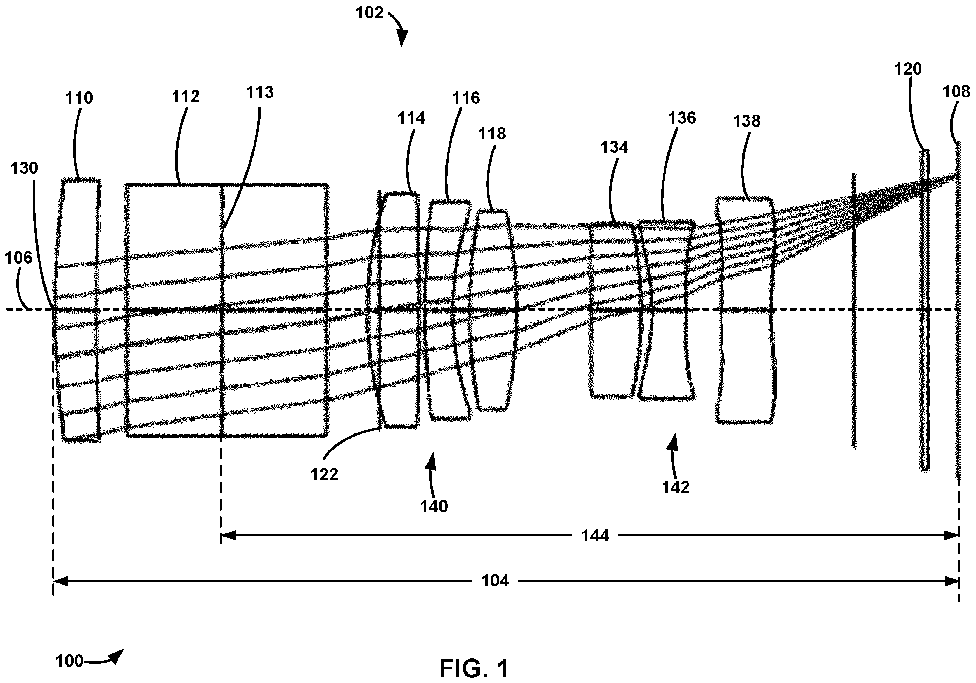

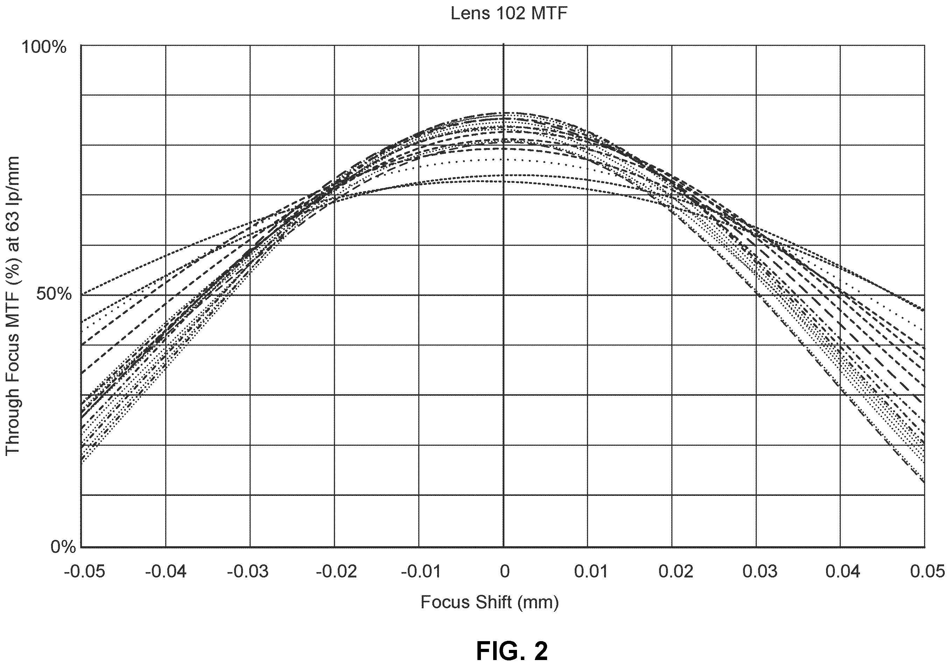

FIG. 1 is a cross-sectional diagram of an example camera 100, in accordance with one or more aspects of the present disclosure. FIGS. 2-5 are plots illustrating lens performance and/or quality of camera 100. In the example shown, camera 100 includes lens 102 and sensor 108, and lens 102 includes a plurality of optical elements, e.g., two or more lens elements. In the example shown, lens 102 includes seven lens elements 110, 114, 116, 118, 134, 136, and 138 arranged in order along an optical axis 106 from an object side to an image side, e.g., with lens element 110 as the object side lens element and lens element 138 as the image side lens element. Lens elements 110, 114, 116, 118, 134, 136, and 138 may be refractive lens elements. Lens element 110 may be referred to as front lens element 110. Lens elements 114, 116, 118 and 134, 136, 138 may be arranged in groups, e.g., with first lens element group 140 including lens elements 114, 116, 118 and second lens element group 142 including lens elements 134, 136, 138. The first lens element 110 may be arranged on an object side of prism 112, and the first lens element group 140 and the second lens element group 142, e.g., lens elements 114, 116, 118, 134, 136, and 138, may be arranged on an image side of prism 112. In some examples, first lens element group 140 may comprise a negative optical power, and at least two of the lens elements of the second refractive lens element group 142 each comprise a negative optical power.

Prism 112 may be configured to fold the optical system along an image-side direction and an object-side direction, e.g., to redirect light via reflection from a reflecting surface of prism 112 to sensor 108. Prism 112 may be a rectangular prism, a cube prism, a wedge prism, or any suitable prism configured to fold optical axis 106. In the example shown, camera 100 is illustrated in an unfolded format. Prism 112 may be configured to rotate about pitch axis that is substantially perpendicular to the image-side direction and substantially parallel with a plane defined by sensor 108, and prism 112 may also be configured to rotate about roll axis that is substantially parallel with the image-side direction and perpendicular to the plane defined by sensor 108, e.g., to perform optical image stabilization. In some examples, lens element 110 and prism 112 may be configured to rotate together in a pitch direction or a roll direction together to perform optical image stabilization.

Lens 102 may have a total track length (TTL) 104 extending from the front vertex, e.g., object side vertex along optical axis 106, of front lens element 110 to sensor 108. Lens 102 also may include lens stop 122 arranged on an object side of lens element 114, e.g., between prism 112 and lens element 114. In other examples, lens stop 122 may be located anywhere within lens 102, e.g., anywhere within TTL 104. In some examples, lens stop 122 may be a mechanical aperture comprising an opaque material and configured to have a clear aperture, and in other examples lens stop 122 may be one of lens elements 110, 114-138, prism 112, or filter 120.

In some examples, lens 102 may include filter 120. Filter 120 may be an optical filter, spatial filter, polarizing filter, or the like. For example, filter 120 may be an infrared (IR) cut filter configured to reduce transmission of, or be opaque to, IR wavelengths of light. Filter 120 may be formed of a plastic material, a glass material, or any suitable material. In the example shown, filter 120 does not have optical power (e.g., or refractive power, or focusing power). Although illustrated as separate components, in some examples, filter 120 may comprise a coating on a surface of one or more of lens elements 110, 114-138, prism 112, and/or a surface of sensor 108, or other methods or components may be used to provide optical filtering.

Parameters of lens 102, e.g., the overall lens 102 optical power, the optical powers of lens elements 110, 114-138, the lens shapes, thicknesses, geometries, positions, materials, spacings, and the surface shapes of lens elements 110, 114-138 may be selected, at least in part, to provide telephoto lens with a TTL 104 of less than or equal to 29 millimeters (mm), a lens width 144 of less than or equal to 24 mm, and an axial color aberration of less than 20 micrometers. Parameters of lens 102 may also be selected to reduce, compensate, or correct for optical aberrations and lens artifacts and effects across the field of view including one or more of, but not limited to, defocus, spherical aberration, coma, astigmatism, distortion, the field curvature or Petzval sum, vignetting, lateral chromatic aberration, lens flare, or the like.

Parameters of lens 102 may also be selected to provide a high-resolution image configured for high resolution image capture, e.g., with a modulation transfer function (MTF) compatible with an 8 megapixel (MP), 12 MP, 16 MP, 48 MP or greater sensor 108. For example, sensor 108 may be an array of photosensitive pixels, and parameters of lens 102 may be selected to such that lens 102 has an MTF and image forming quality such that the pixel sizes of the sensor array 108 capturing the image limit the resolution of the captured image rather than the MTF and/or quality of lens 102. In some examples, sensor 108 may be a relatively large sensor, e.g., a 1/1.32 inch sensor having a diagonal size of about 12 mm. In some examples, sensor 108 may be a 48 MP sensor have 1 micrometer sized pixels. Sensor 108 may be an integrated circuit (IC) technology chip or chips implemented according to any of various types of photosensor technology. Examples of photosensor technology that may be used are charge-coupled device (CCD) technology and complementary metal-oxide-semiconductor (CMOS) technology.

In some examples, lens elements 110, 114, and 134-138 may be comprised of a plastic material, such as a polycarbonate, a polyester, a polystyrene, an acrylic such as poly(methyl methacrylate) (PMMA), or any suitable polymer, an injection molded plastic material, and lens elements 116, 118 may comprise a glass material. For example, glass materials may have less dispersion than plastic materials, and using a glass material for one or more of the lens elements 110, 114-138, e.g., lens elements 116, 118, may reduce the overall chromatic aberration (axial and/or lateral) of lens 102. Plastic materials may be easier to form and/or modify to achieve desired surface shapes, e.g., aspherical shapes, relative to glass materials. In some examples, the one or more glass lens elements of lens 102, e.g., lens elements 116, 118 in the example shown, may be spherical lens elements. For example, lens elements 116, 118 may have surface shapes that are spherical and are non-aspheric, e.g., without an aspherical curvature. In some examples, lens 102 may balance lens elements having complex curved shapes, e.g., aspherical surfaces, so as to reduce some aberrations and improve lens quality with lens elements having less complex shapes, e.g., spherical surfaces, but made of materials having less dispersion, so as to balance manufacturability and lens performance.

In some examples, lens elements 110, 114-138 may include one or more coatings (e.g., anti-reflective coatings). In some examples, lens 102 may include a cover glass (not shown). For example, a cover glass may be located on the object side of lens element 110 and may be configured to protect lens 102 from damage, e.g., environmental and/or contact with damaging materials. In some examples, the cover glass may be a hard glass, a glass and/or plastic with a hard coat, a sapphire, or any suitable material for protecting a surface of lens 102 (e.g., the object side surface of lens element 110). In some examples, the cover glass may have a small amount of optical power.

In the example shown, sensor 108 may be positioned at an image plane and/or focal plane of lens 102, and lens 102 is configured to form an image at sensor 108. The image size for a distant object is directly proportional to the effective focal length (EFL) of a lens 102. TTL 104 is the physical distance (also referred to as the mechanical distance, as opposed to an optical distance) along optical axis 106 between the object side vertex 130 of lens element 110 and the image plane and/or focal plane, and the lens width 144 is the physical distance between the reflecting surface of prism 112 and the image plane and/or focal plane, e.g., to sensor 108. The lens width 144 may be referred to as the x-distance of lens 102. For example, prism 112 folds the TTL 104 of lens 102 along two directions. The first direction may be referred to as a z-direction in reference to the portion of optical axis 106 extending from reflecting surface 113 in a direction that is substantially perpendicular with respect to an outer surface of a device including camera 100 and lens 102. For example, the outer surface of the device may serve as a reference x-y plane, and a portion of the TTL 104 of lens 102, e.g., from reflecting surface 113 to the axial vertex of lens element 110, may be in the z-direction substantially perpendicular to the reference x-y plane, and another portion of the TTL 104, e.g., from reflecting surface 113 to sensor 108, may be in a direction parallel to the reference x-y plane, such as the x-direction. In this way, lens 102 may have a folded TTL 104 so as to keep the z-direction thickness of a device relatively thin, by folding a lens width 144 distance along an "x-direction" along the length and/or height of the device.

In some examples, the lens 102 may have an EFL of less than or equal to 30 mm, or less than or equal to 25 mm, or less than or equal to 22 mm. Lens 102 may have an F-number (F/#) between about 1.0 and 5.0, or between about 2.0 and 3.0, or between about 2.5 and 3.0. Note that the F/#, also referred to as the focal ratio, may be defined by EFL/D, where D is the diameter of the entrance pupil, which is the image of lens stop 122 as seen from the object side of lens 102. In the example shown, lens 102 has an EFL of about 22 mm, an F/# of about 2.88, a diagonal field of view (DFOV) of about 25 degrees for focus at infinity and a DFOV of about 15 degrees for focus at 30 cm, a TTL 104 of about 28.95 mm, a lens width 144 of about 23.6 mm, and an axial color aberration of about 17 micrometers.

In some examples, the EFL, F/#, TTL 104, lens width 144, sensor 108, and/or other camera 100 and/or lens 102 parameters may vary, and may be scaled or adjusted to meet various specifications of optical, imaging, and/or packaging constraints. Constraints for a camera system that may be specified as requirements for camera 100 and/or lens 102 and/or that may be varied for different camera system applications may include, but are not limited to, EFL, F/#, TTL 104, lens stop 122 location, DFOV, sensor 108 size, imaging performance requirements, and packaging volume or size constraints.

In some examples, the camera 100 may be adjustable. For example, lens 102 may include an adjustable lens stop 122, e.g., via an iris configured to have an adjustable clear aperture size and/or diameter. Using an adjustable lens stop 122, the F/# may be dynamically varied within a range. In some examples, camera 100 may be used at faster (e.g., lower) F/# by adjusting the aperture stop at the same DFOV, which my reduce or "trade off" imaging quality performance to increase the amount of light (brightness) captured by lens 102, which may allow the time of sensor 108 (e.g., and associated sensor noise), to be reduced, e.g., for low light conditions. In some examples, camera 100 may be used at slower (e.g., higher) F/# by adjusting the aperture stop at the same DFOV, which may improve imaging quality performance and decrease the amount of light captured by lens 102, e.g., for brighter lighting conditions.

In some examples, lens 102 may be configured to focus objects at a plurality of object distances, e.g., through a focal range for objects at distances from infinity to a near focus distance, e.g., a macro focus distance such as 30 centimeters or closer. In some examples, the lens may be configured to focus through a focal range by moving only a portion of the plurality of lens elements with a relatively shorter focus stroke length, thereby providing improved lens robustness, e.g., via reducing the chances of the lens elements that are used to move to focus from contacting each other or non-moving components by reducing the number of lens elements that need to move to focus and by reducing the amount that those lens elements need to move. The stroke length may comprise the total axial length of motion of the portion of the plurality of lens element to focus through the entire focal range. For example, lens 102 may be configured to move second lens element group 142, e.g., as a group, along the stroke length to change the focus of lens 102, e.g., to focus through the focal range. In some examples, lens 102 may be configured to change focus by moving only second lens element group 142. Lenses 602, 1002, and 1402 may similarly be configured to move respective second lens element groups 642, 1042, 1442 (and in some examples only second lens element groups 642, 1042, 1442), e.g., as a group, along the stroke length to change the focus of lenses 602, 1002, and 1402, respectively, e.g., to focus through the focal range. Though not shown in the figures, it will be recognized that a device will typically include a housing, one or more processors, operating system and/or drivers, and mechanical structure supporting the lens, and movement of the lens may be driven by any suitable micro-actuator or other motor.

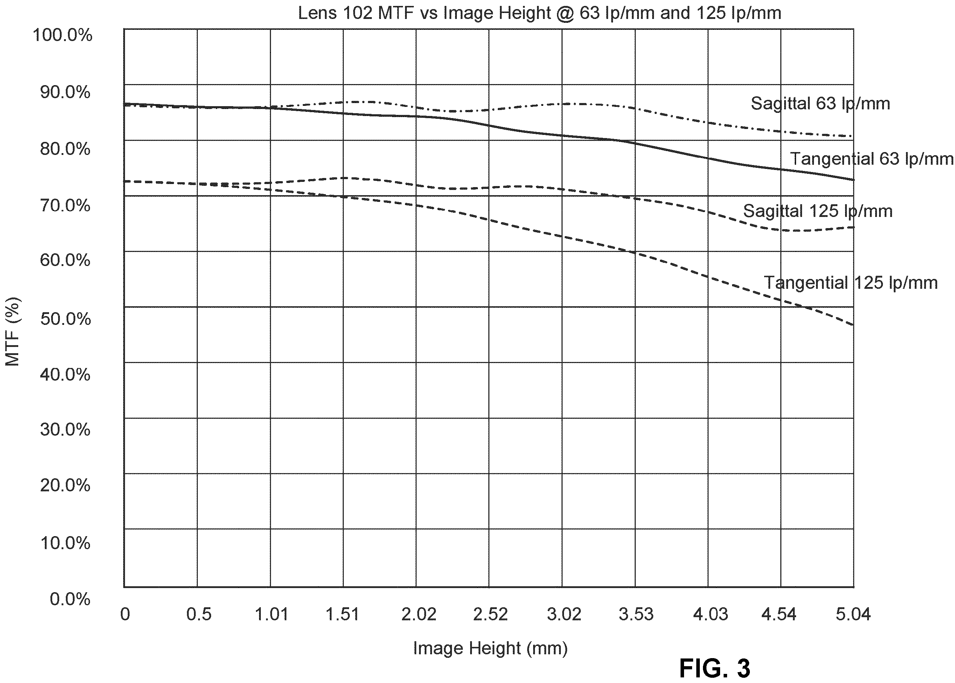

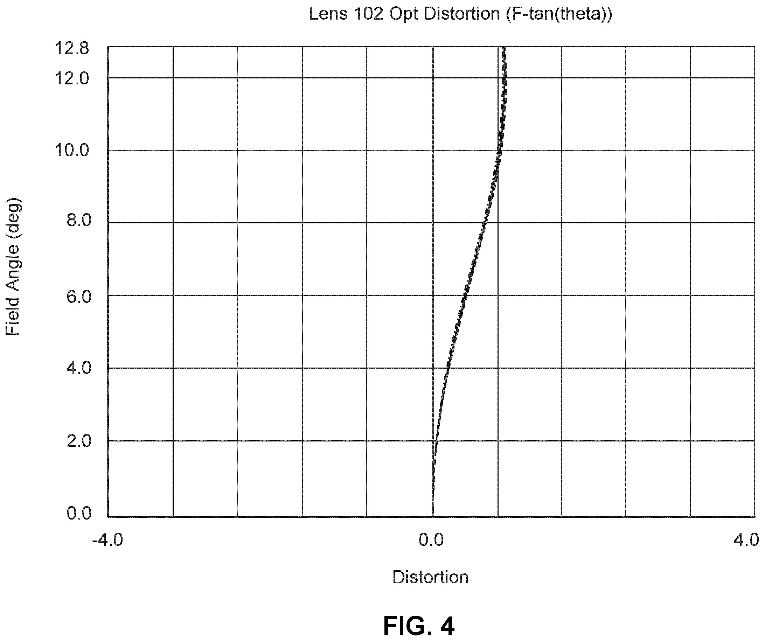

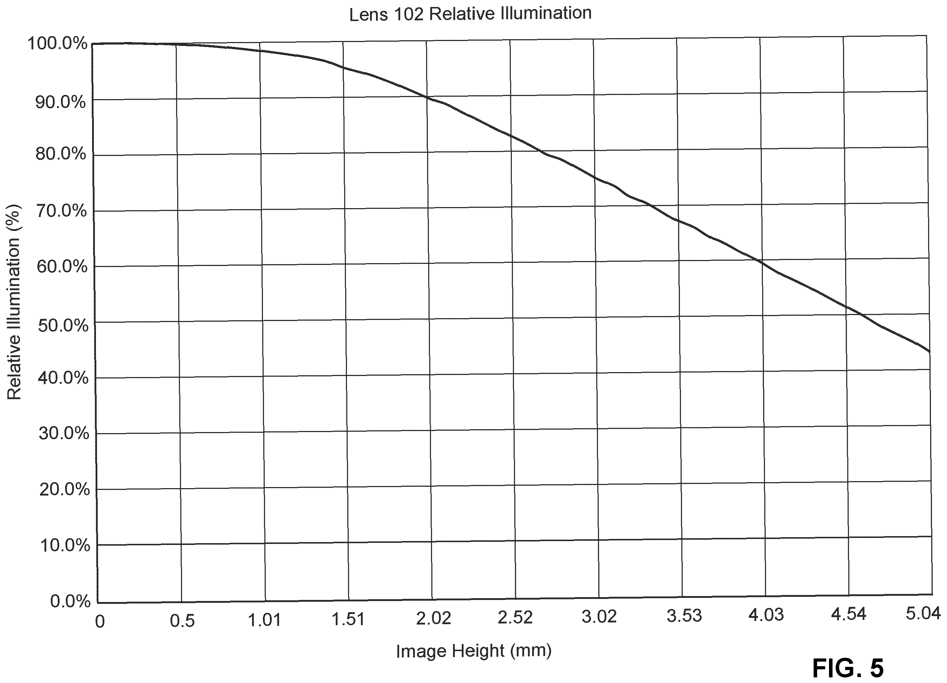

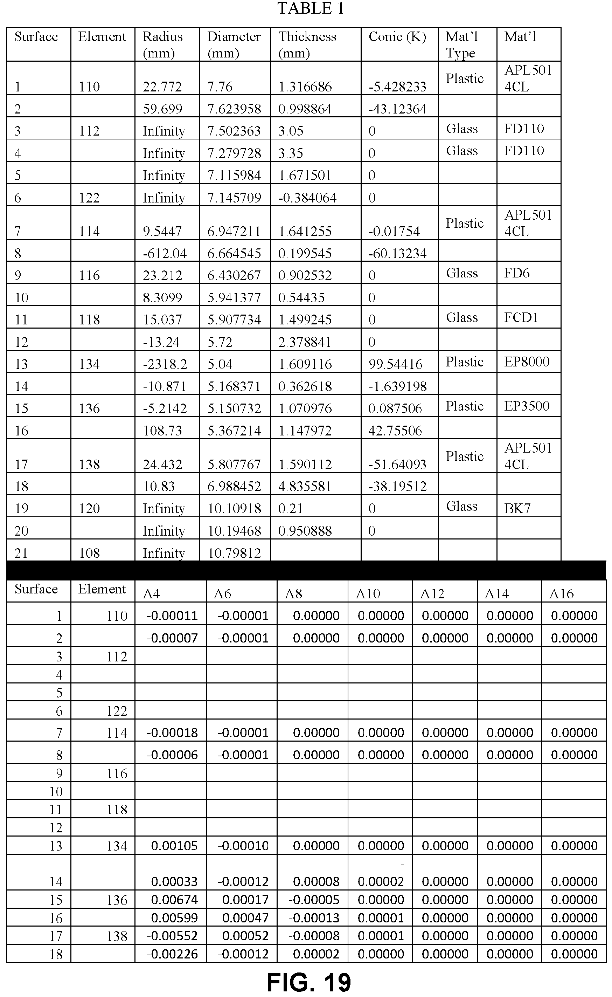

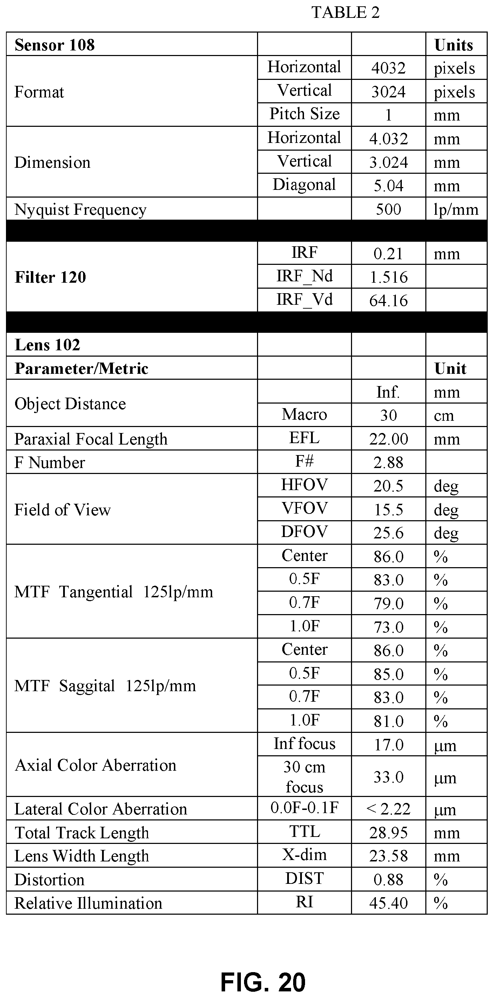

FIGS. 19 and 20 include Tables 1 and 2. Table 1 provides design details of camera 100, Table 2 provides performance and/or quality details of camera 100, and FIGS. 2-5 illustrate lens performance and/or quality of camera 100. FIG. 2 is a plot of a through focus modulation transfer function (MTF) of the example camera 100 for image heights (IH) ranging from 0 IH to 1.0 IH in steps of 0.1 IH in both the tangential and sagittal planes, where the image height is 5.04 mm in the example shown. FIG. 3 is a plot of MTF versus image height of the example camera 100, FIG. 4 is a plot of a distortion of the example camera 100 at wavelengths of 435 nm, 470 nm, 510 nm, 555 nm, 610 nm, and 650 nm. FIG. 5 is a plot of a relative illumination at 555 nm of the example camera 100.

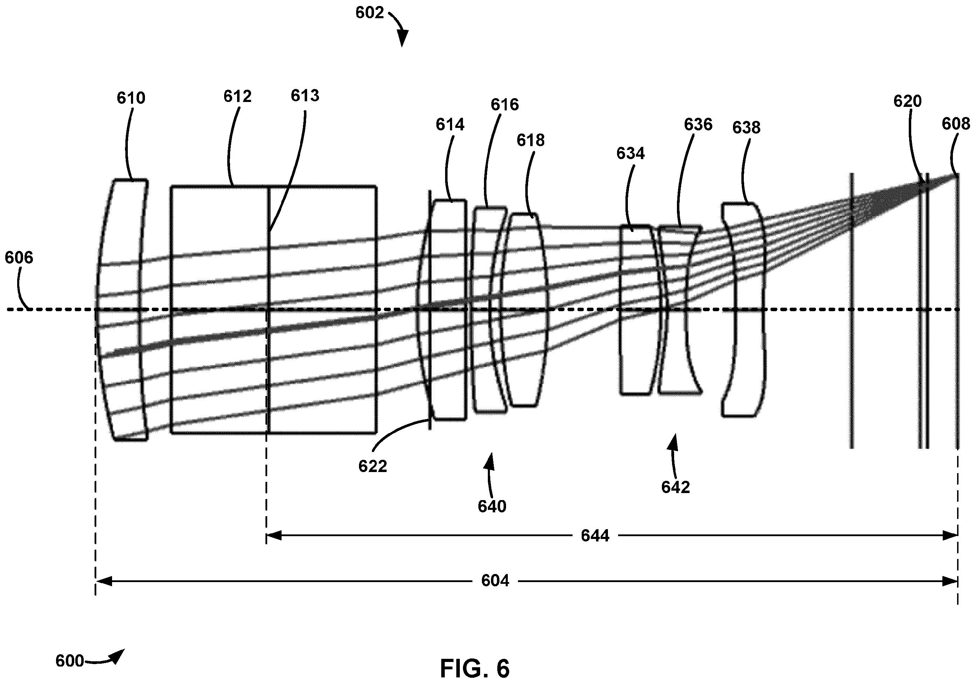

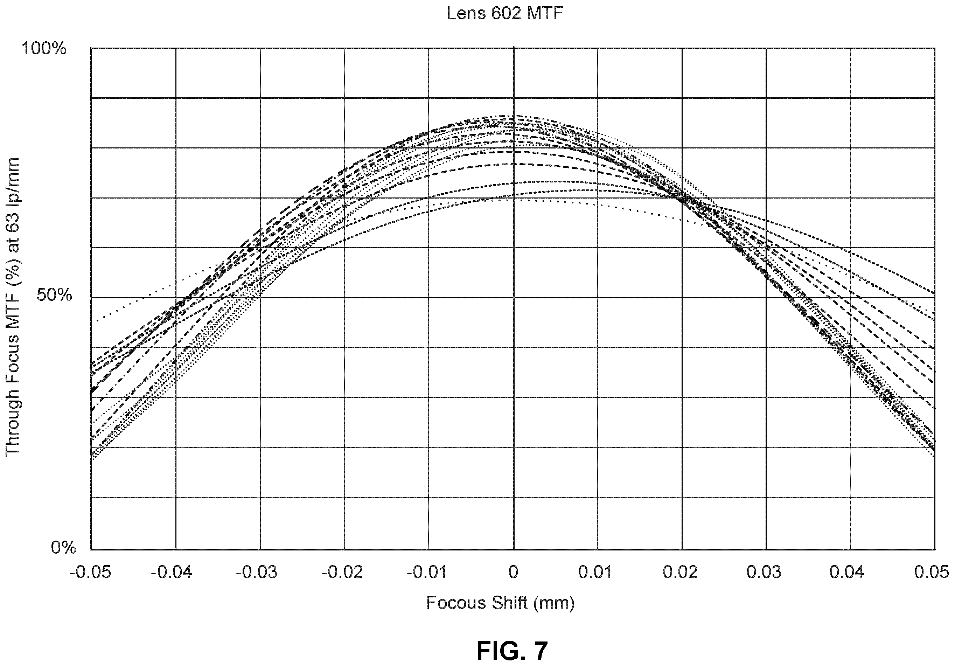

FIGS. 6, 10, and 14 are cross-sectional diagrams of example cameras 600, 1000, and 1400, respectively, in accordance with one or more aspects of the present disclosure. FIGS. 7-9, 11-13, and 15-18 illustrate lens performance and/or quality of cameras 600, 1000, and 1400, respectively, similar to FIGS. 2-5.

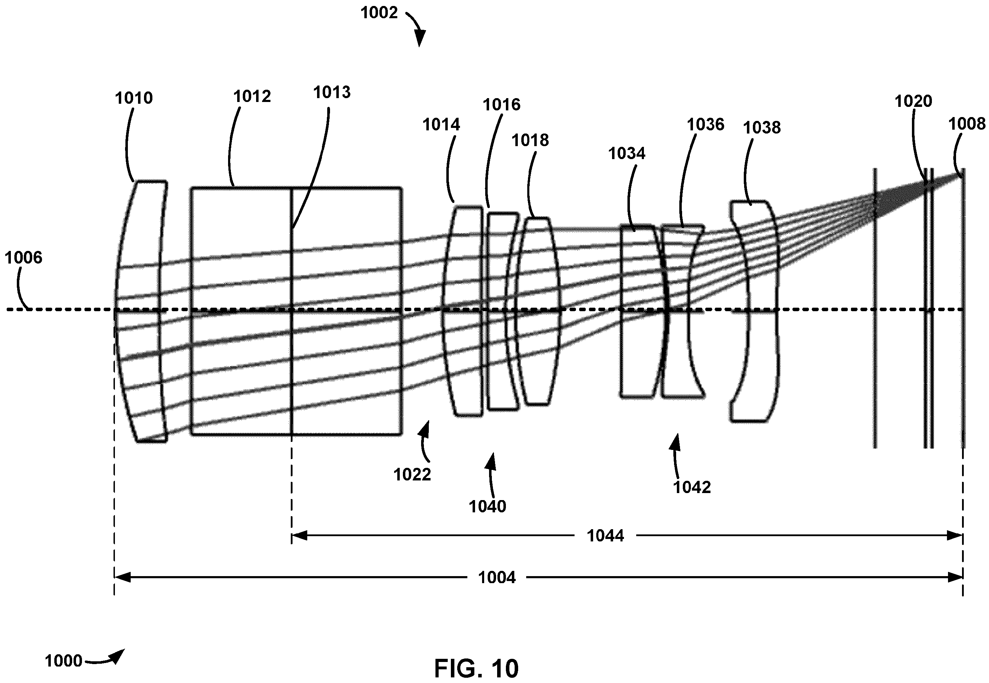

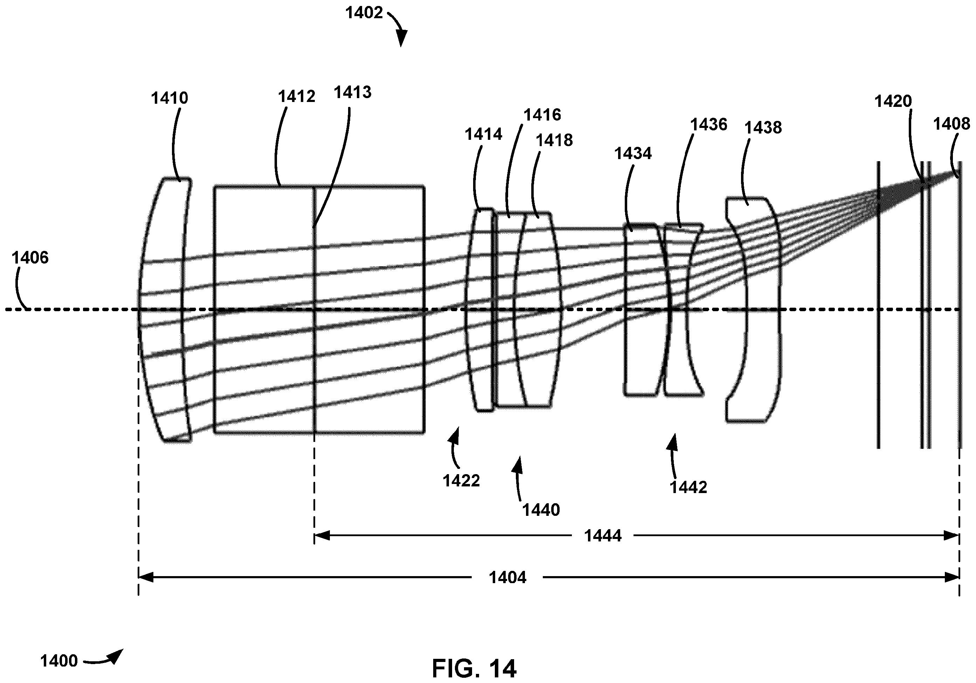

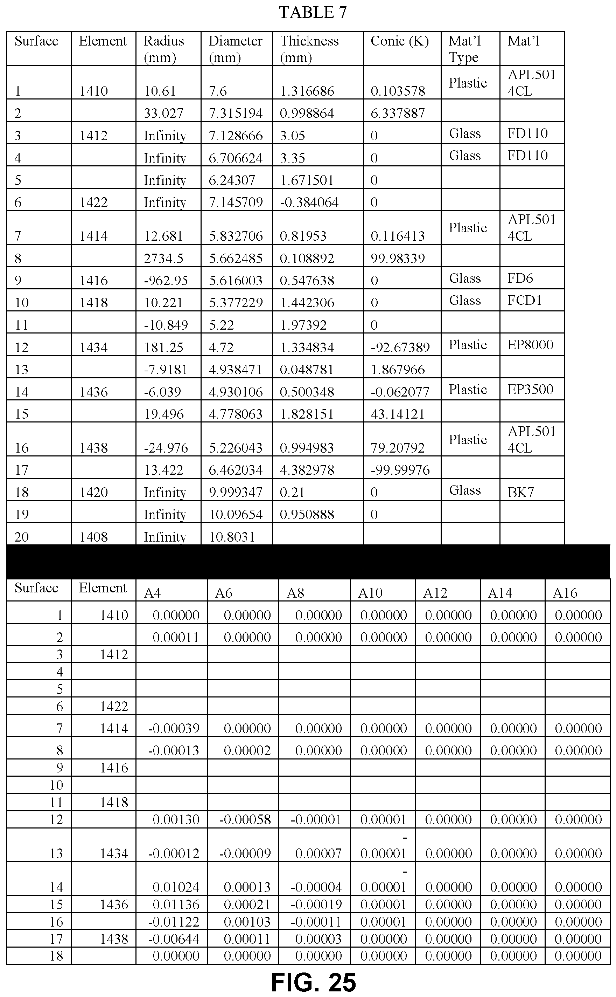

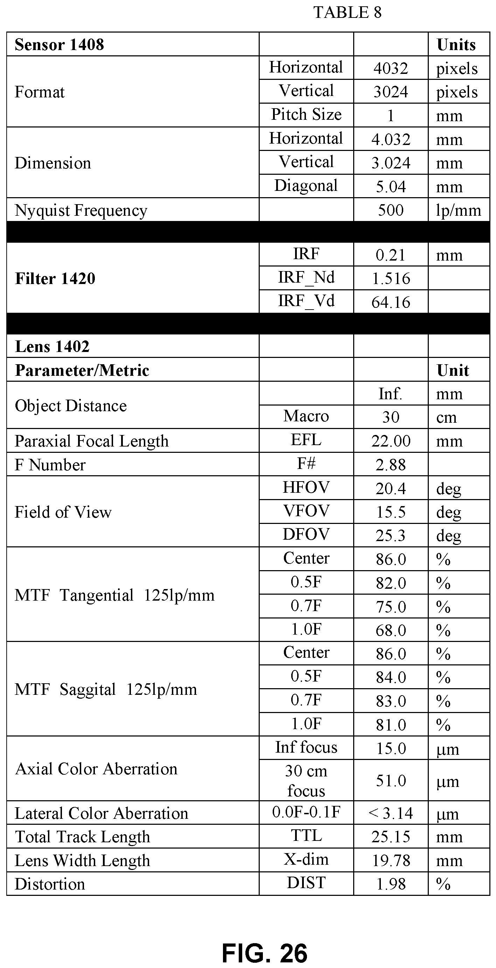

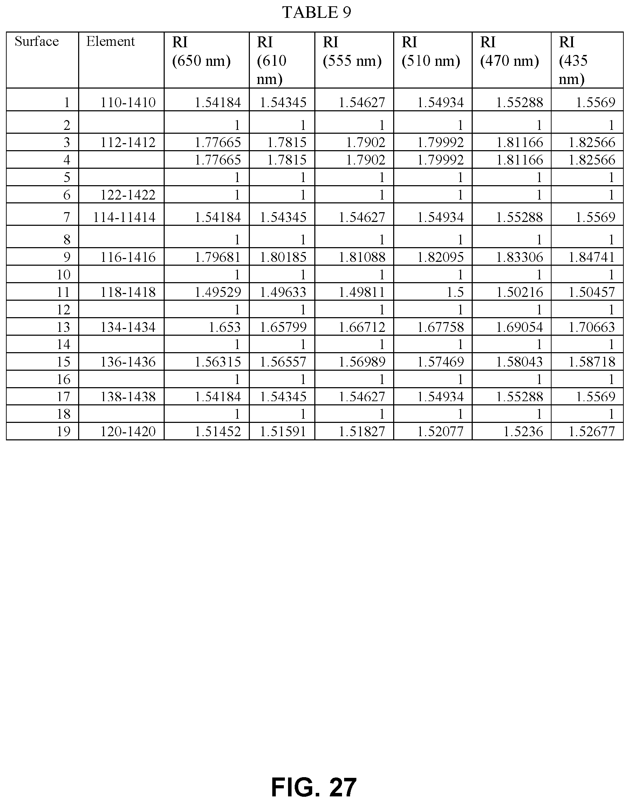

FIGS. 19-26 include Tables 1-8, and FIG. 27 includes Table 9. Tables 1-2 provide example values for various optical and physical parameters of camera 100 as described in reference to FIG. 1, Tables 3-4 provide example values for various optical and physical parameters of camera 600 as described in reference to FIG. 6 below, Tables 5-6 provide example values for various optical and physical parameters of camera 1000 as described in reference to FIG. 10 below, Tables 7-8 provide example values for various optical and physical parameters of camera 1400 as described in reference to FIG. 14 below, and Table 9 lists the refractive index for the materials of the lens elements for each of lenses 102, 602, 1002, and 1402 and filters 120, 620, 1020, and 1420. In Table 9, the refractive index (RI) is indicated at six wavelengths in the visible wavelength spectrum. In Tables 1-8, all dimensions are in millimeters (mm) unless otherwise specified. The surface numbers of the elements as shown in Tables 1-8 are listed from a first surface (surface 1) being the object side of the object side lens element, e.g., an object side of lens elements 110, 610, 1010, and 1410 in Tables 1, 3, 5, and 7, respectively, to a last surface (surface 21 at sensors 108, 608, and 1008, and surface 20 at sensor 1408), respectively, e.g., the image plane/focal plane/photosensor surface of the respective cameras 100, 600, 1000, and 1400. A positive radius indicates that the center of curvature is to the right (image side) of the surface. A negative radius indicates that the center of curvature is to the left (object side) of the surface. "Infinity" is as typically used in optics, e.g., indicating a planar surface having a "center of curvature" at "infinity". The thickness (or separation) is the axial distance to the next surface. A negative thickness indicates a distance in the opposite direction, e.g., from left to right (such as for the lens stops 122, 622, 1022, 1422). F/# stands for F-number of the camera (e.g., F/2, F/2.4, F/4, or the like). HFOV stands for the horizontal field of view, VFOV stands for the vertical field of view, and DFOV stands for diagonal field of view. The EFL of Tables 2, 4, 6, and 8 indicate the overall effective focal length of lenses 102, 602, 1002, and 1402, respectively.

Referring to the aspheric coefficients A4-A16 of Tables 1, 3, 5, and 7, the aspheric equation describing an aspherical surface may be given by equation (2): $\begin{matrix}Z = \left(\frac{{cr}^{2}}{1 + \sqrt{1 - \left(1+K\right) {c}^{2} {r}^{2}}}\right) + {A}_{4} {r}^{4} + {A}_{6} {r}^{6} + {A}_{8} {r}^{8} + {A}_{10} {r}^{10} + {A}_{12} {r}^{12} + {A}_{14} {r}^{14} \\ + {A}_{16} {r}^{16}\end{matrix}$ (2)
where Z is the sag of surface parallel to the z-axis (the z-axis and the optical axis are coincident in these example embodiments), r is the radial distance from the vertex, c is the curvature at the pole or vertex of the surface (the reciprocal of the radius of curvature of the surface), K is the conic constant, and A4-A18 are the aspheric coefficients.

Note that the values given for the various parameters of example cameras 100, 600, 1000, and 1400 in Tables 1-8, as well as Table 9 below, are given by way of example and are not intended to be limiting. For example, one or more of the parameters for one or more of the surfaces of one or more of the lens elements, as well as parameters for the materials of which the elements are composed, may be given different values while still providing similar performance for the camera. In particular, note that some values in the Tables may be scaled up or down for larger or smaller implementations of a camera using examples camera 100, 600, 1000, and 1400.

FIG. 6 is a cross-sectional diagram of an example camera 600, in accordance with one or more aspects of the present disclosure. Camera 600 of FIG. 6 may be substantially similar to camera 100 of FIG. 1, but has different lens parameters, e.g., lens 602 has different lens design parameters from lens 102 and different optical performance. FIGS. 7-9 are plots illustrating lens performance and/or quality of camera 600. Camera 600 may include lens 602 and sensor 608, and lens 602 may include a plurality of lens elements, e.g., two or more lens elements. Sensor 608 may be substantially similar to sensor 108 (FIG. 1) described above and may be an example of sensor 108.

In the example shown, lens 602 includes seven lens elements 610, 614, 616, 618, 634, 636, and 638 arranged in order along optical axis 606 from an object side to an image side, e.g., with lens element 610 as the object side lens element and lens element 638 as the image side lens element. Optical axis 606 may be substantially similar to optical axis 106 (FIG. 1) described above and may be an example of optical axis 106. Lens elements 610, 614, 616, 618, 634, 636, and 638 may be refractive lens elements. Lens element 610 may be referred to as front lens element 610. Lens elements 614, 616, 618 and 634, 636, 638 may be arranged in groups, e.g., with first lens element group 640 including lens elements 614, 616, 618 and second lens element group 642 including lens elements 634, 636, 638. The first lens element 610 may be arranged on an object side of prism 612, and the first lens element group 640 and the second lens element group 642, e.g., lens elements 610, 614, 616, 618, 634, 636, and 638 may be arranged on an image side of prism 612. Prism 612 may be substantially similar to prism 112 (FIG. 1) described above and may be an example of prism 112. In the example shown, prism 612 includes reflecting surface 613, which may be substantially similar to reflecting surface 113 (FIG. 1). In some examples, first lens element group 640 may comprise a negative optical power, and at least two of the lens elements of the second refractive lens element group 642 each comprise a negative optical power.

Lens 602 may have a total track length (TTL) 604 extending from the front vertex, e.g., object side vertex along optical axis 606, of front lens element 610 to sensor 608. Lens 602 also may include lens stop 622 arranged on an object side of lens element 614, e.g., between prism 612 and lens element 614. In other examples, lens stop 622 may be located anywhere within lens 602, e.g., anywhere within TTL 604. In some examples, lens stop 622 may be a mechanical aperture comprising an opaque material and configured to have a clear aperture, and in other examples lens stop 622 may be one of lens elements 610, 614-638, prism 612, or filter 620. In some examples, lens stop 622 may be substantially similar to lens stop 122 (FIG. 1) described above and may be an example of lens stop 122.

In some examples, lens 602 may include filter 620. Filter 620 may be substantially similar to filter 120 (FIG. 1) described above and may be an example of filter 120. Parameters of lens 602, e.g., the overall lens 602 optical power, the optical powers of lens elements 610, 614-638, the lens shapes, thicknesses, geometries, positions, materials, spacings, and the surface shapes of lens elements 610, 614-638 may be selected, at least in part, to provide telephoto lens with a TTL 604 of less than or equal to 29 millimeters (mm), a lens width 644 of less than or equal to 24 mm, and an axial color aberration of less than 20 micrometers. Parameters of lens 602 may also be selected to reduce, compensate, or correct for optical aberrations and lens artifacts and effects across the field of view including one or more of, but not limited to, defocus, spherical aberration, coma, astigmatism, distortion, the field curvature or Petzval sum, vignetting, lateral chromatic aberration, lens flare, or the like. Parameters of lens 602 may also be selected to provide a high-resolution image configured for high resolution image capture, e.g., with a modulation transfer function (MTF) compatible with an 8 megapixel (MP), 12 MP, 16 MP, 48 MP or greater sensor 608, as described above with reference to FIG. 1.

In some examples, lens elements 610, 614, and 634-638 may be comprised of a plastic material, such as a polycarbonate, a polyester, a polystyrene, an acrylic such as poly(methyl methacrylate) (PMMA), or any suitable polymer, an injection molded plastic material, and lens elements 616, 618 may comprise a glass material. For example, glass materials may have less dispersion than plastic materials, and using a glass material for one or more of the lens elements 610, 614-638, e.g., lens elements 616, 618, may reduce the overall chromatic aberration (axial and/or lateral) of lens 602. As described above, plastic materials may be easier to form and/or modify to achieve desired surface shapes, e.g., aspherical shapes, relative to glass materials. In some examples, the one or more glass lens elements of lens 602, e.g., lens elements 616, 618 in the example shown, may be spherical lens. For example, lens elements 616, 618 may have surface shapes that are spherical and are non-aspheric, e.g., without an aspherical curvature. In some examples, lens 602 may balance lens elements having complex curved shapes, e.g., aspherical surfaces, so as to reduce some aberrations and improve lens quality with lens elements having less complex shapes, e.g., spherical surfaces, but made of materials having less dispersion, so as to balance manufacturability and lens performance.

In some examples, lens elements 610, 614-638 may include one or more coatings (e.g., anti-reflective coatings). In some examples, lens 602 may include a cover glass (not shown). For example, a cover glass may be located on the object side of lens element 610 and may be configured to protect lens 602 from damage, e.g., environmental and/or contact with damaging materials. In some examples, the cover glass may be a hard glass, a glass and/or plastic with a hard coat, a sapphire, or any suitable material for protecting a surface of lens 602 (e.g., the object side surface of lens element 610). In some examples, the cover glass may have a small amount of optical power.

In the example shown, TTL 604, lens width 644, and the x-distance of lens 602 may be defined similarly to TTL 104, lens width 144, and the x-distance of lens 102 described above. In some examples, the lens 602 may have an EFL of less than or equal to 30 mm, or less than or equal to 25 mm, or less than or equal to 22 mm. Lens 602 may have an F-number (F/#) between about 1.0 and 5.0, or between about 2.0 and 3.0, or between about 2.5 and 3.0. Note that the F/#, also referred to as the focal ratio, may be defined by EFL/D, where D is the diameter of the entrance pupil, which is the image of lens stop 622 as seen from the object side of lens 602. In the example shown, lens 602 has an EFL of about 22 mm, an F/# of about 2.88, a diagonal field of view (DFOV) of about 25 degrees for focus at infinity and a DFOV of about 15 degrees for focus at 30 cm, a TTL 604 of about 26.88 mm, a lens width 644 of about 21.54 mm, and an axial color aberration of about 15 micrometers.

In some examples, the EFL, F/#, TTL 604, lens width 644, sensor 608, and/or other camera 600 and/or lens 602 parameters may vary, and may be scaled or adjusted to meet various specifications of optical, imaging, and/or packaging constraints. Constraints for a camera system that may be specified as requirements for camera 600 and/or lens 602 and/or that may be varied for different camera system applications may include, but are not limited to, EFL, F/#, TTL 604, lens stop 622 location, DFOV, sensor 608 size, imaging performance requirements, and packaging volume or size constraints.

In some examples, the camera 600 may be adjustable, similar to as described above with reference to camera 100. For example, lens 602 may include an adjustable lens stop 622, and the F/# of camera 600 may be dynamically varied within a range, e.g., camera 600 may be used at faster (e.g., lower) F/# to increase the amount of light (brightness) captured by lens 602, and/or camera 600 may be used at slower (e.g., higher) F/# which may improve imaging quality performance.

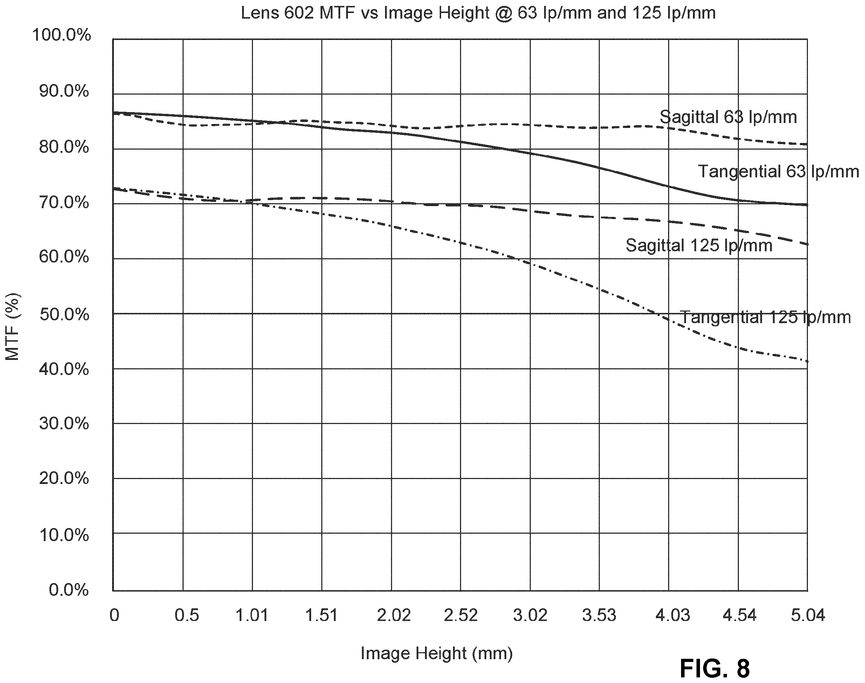

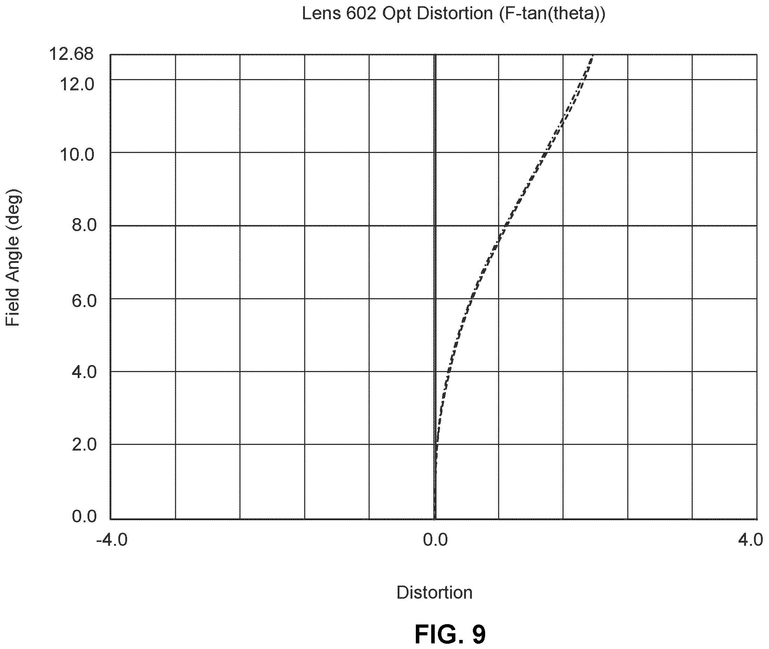

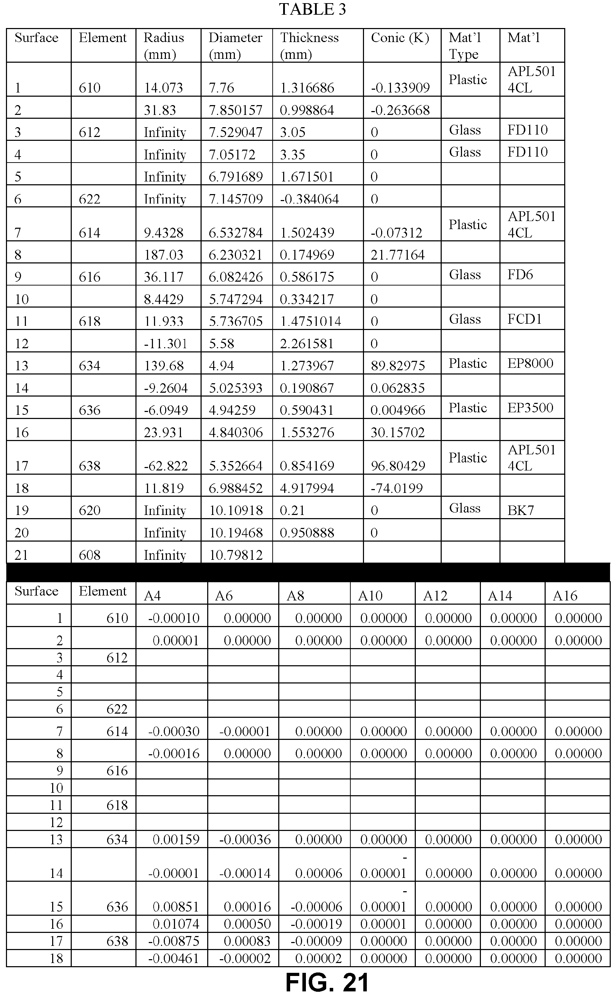

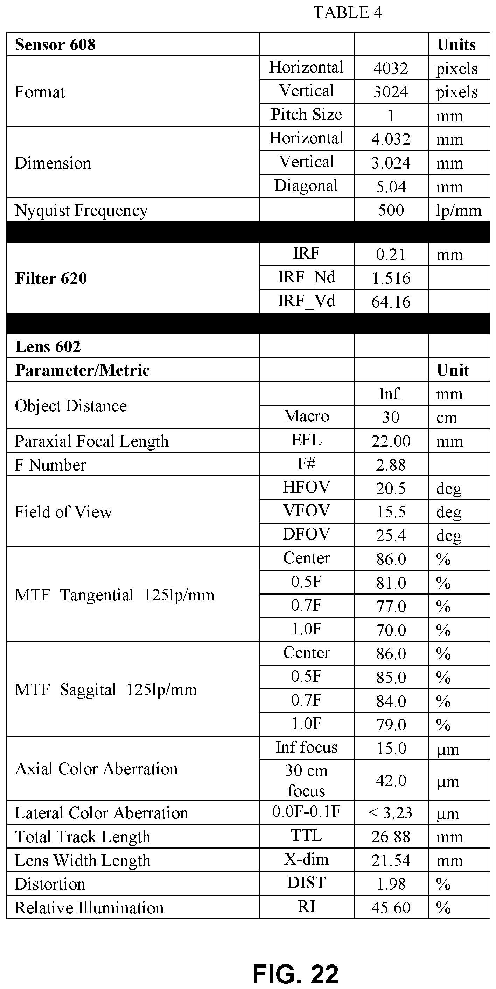

As discussed above, FIGS. 21 and 22 include Tables 3-4 which provide example values for various optical and physical parameters of camera 600 as described in reference to FIG. 6. FIG. 7 is a plot of a through focus modulation transfer function (MTF) of the example camera 600, FIG. 8 is a plot of MTF versus field of the example camera 600, and FIG. 9 is a plot of a distortion of the example camera 600.

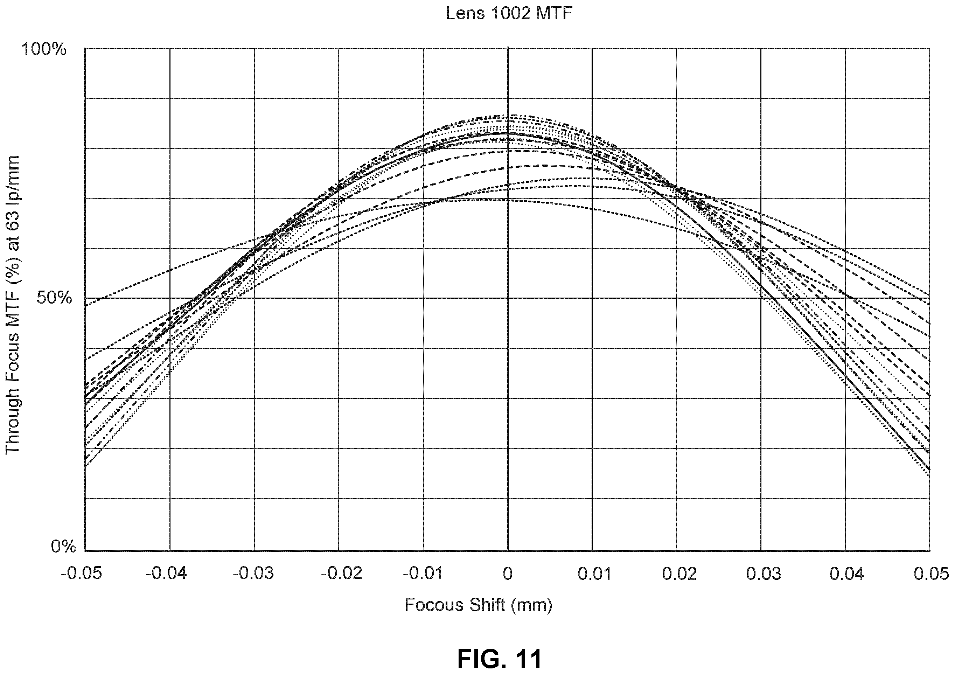

FIG. 10 is a cross-sectional diagram of an example camera 1000, in accordance with one or more aspects of the present disclosure. Camera 1000 of FIG. 10 may be substantially similar to camera 100 of FIG. 1, but has different lens parameters, e.g., lens 1002 has different lens design parameters from lens 102 and different optical performance. FIGS. 11-13 are plots illustrating lens performance and/or quality of camera 1000. Camera 1000 may include lens 1002 and sensor 1008, and lens 1002 may include a plurality of lens elements, e.g., two or more lens elements. Sensor 1008 may be substantially similar to sensor 108 (FIG. 1) described above and may be an example of sensor 108.

In the example shown, lens 1002 includes seven lens elements 1010, 1014, 1016, 1018, 1034, 1036, and 1038 arranged in order along optical axis 106 from an object side to an image side, e.g., with lens element 1010 as the object side lens element and lens element 1038 as the image side lens element. Optical axis 1006 may be substantially similar to optical axis 106 (FIG. 1) described above and may be an example of optical axis 1006. Lens elements 1010, 1014, 1016, 1018, 1034, 1036, and 1038 may be refractive lens elements. Lens element 1010 may be referred to as front lens element 1010. Lens elements 1014, 1016, 1018 and 1034, 1036, 1038 may be arranged in groups, e.g., with first lens element group 1040 including lens elements 1014, 1016, 1018 and second lens element group 1042 including lens elements 1034, 1036, 1038. The first lens element 1010 may be arranged on an object side of prism 1012, and the first lens element group 1040 and the second lens element group 1042, e.g., lens elements 1010, 1014, 1016, 1018, 1034, 1036, and 1038 may be arranged on an image side of prism 1012. Prism 1012 may be substantially similar to prism 112 (FIG. 1) described above and may be an example of prism 112. In the example shown, prism 1012 includes reflecting surface 1013, which may be substantially similar to reflecting surface 113 (FIG. 1). In some examples, first lens element group 1040 may comprise a negative optical power, and at least two of the lens elements of the second refractive lens element group 1042 each comprise a negative optical power.

Lens 1002 may have a total track length (TTL) 1004 extending from the front vertex, e.g., object side vertex along optical axis 1006, of front lens element 1010 to sensor 1008. Lens 1002 also may include lens stop 1022 arranged on an object side of lens element 1014, e.g., between prism 1012 and lens element 1014. In other examples, lens stop 1022 may be located anywhere within lens 1002, e.g., anywhere within TTL 1004. In some examples, lens stop 1022 may be a mechanical aperture comprising an opaque material and configured to have a clear aperture, and in other examples lens stop 1022 may be one of lens elements 1010, 1014-1038, prism 1012, or filter 1020. In some examples, lens stop 1022 may be substantially similar to lens stop 122 (FIG. 1) described above and may be an example of lens stop 122.

In some examples, lens 1002 may include filter 1020. Filter 1020 may be substantially similar to filter 120 (FIG. 1) described above and may be an example of filter 120. Parameters of lens 1002, e.g., the overall lens 1002 optical power, the optical powers of lens elements 1010, 1014-1038, the lens shapes, thicknesses, geometries, positions, materials, spacings, and the surface shapes of lens elements 1010, 1014-1038 may be selected, at least in part, to provide telephoto lens with a TTL 1004 of less than or equal to 29 millimeters (mm), a lens width 1044 of less than or equal to 24 mm, and an axial color aberration of less than 20 micrometers. Parameters of lens 1002 may also be selected to reduce, compensate, or correct for optical aberrations and lens artifacts and effects across the field of view including one or more of, but not limited to, defocus, spherical aberration, coma, astigmatism, distortion, the field curvature or Petzval sum, vignetting, lateral chromatic aberration, lens flare, or the like. Parameters of lens 1002 may also be selected to provide a high-resolution image configured for high resolution image capture, e.g., with a modulation transfer function (MTF) compatible with an 8 megapixel (MP), 12 MP, 16 MP, 48 MP or greater sensor 1008, as described above with reference to FIG. 1.

In some examples, lens elements 1010, 1014, and 1034-1038 may be comprised of a plastic material, such as a polycarbonate, a polyester, a polystyrene, an acrylic such as poly(methyl methacrylate) (PMMA), or any suitable polymer, an injection molded plastic material, and lens elements 1016, 1018 may comprise a glass material. For example, glass materials may have less dispersion than plastic materials, and using a glass material for one or more of the lens elements 1010, 1014-1038, e.g., lens elements 1016, 1018, may reduce the overall chromatic aberration (axial and/or lateral) of lens 1002. As described above, plastic materials may be easier to form and/or modify to achieve desired surface shapes, e.g., aspherical shapes, relative to glass materials. In some examples, the one or more glass lens elements of lens 1002, e.g., lens elements 1016, 1018 in the example shown, may be spherical lens. For example, lens elements 1016, 1018 may have surface shapes that are spherical and are non-aspheric, e.g., without an aspherical curvature. In some examples, lens 1002 may balance lens elements having complex curved shapes, e.g., aspherical surfaces, so as to reduce some aberrations and improve lens quality with lens elements having less complex shapes, e.g., spherical surfaces, but made of materials having less dispersion, so as to balance manufacturability and lens performance.

In some examples, lens elements 1010, 1014-1038 may include one or more coatings (e.g., anti-reflective coatings). In some examples, lens 1002 may include a cover glass (not shown). For example, a cover glass may be located on the object side of lens element 1010 and may be configured to protect lens 1002 from damage, e.g., environmental and/or contact with damaging materials. In some examples, the cover glass may be a hard glass, a glass and/or plastic with a hard coat, a sapphire, or any suitable material for protecting a surface of lens 1002 (e.g., the object side surface of lens element 1010). In some examples, the cover glass may have a small amount of optical power.

In the example shown, TTL 1004, lens width 1044, and the x-distance of lens 1002 may be defined similarly to TTL 104, lens width 144, and the x-distance of lens 102 described above. In some examples, the lens 1002 may have an EFL of less than or equal to 30 mm, or less than or equal to 25 mm, or less than or equal to 22 mm. Lens 1002 may have an F-number (F/#) between about 1.0 and 5.0, or between about 2.0 and 3.0, or between about 2.5 and 3.0. Note that the F/#, also referred to as the focal ratio, may be defined by EFL/D, where D is the diameter of the entrance pupil, which is the image of lens stop 1022 as seen from the object side of lens 1002. In the example shown, lens 1002 has an EFL of about 22 mm, an F/# of about 2.88, a diagonal field of view (DFOV) of about 25 degrees for focus at infinity and a DFOV of about 15 degrees for focus at 30 cm, a TTL 1004 of about 26.88 mm, a lens width 1044 of about 21.54 mm, and an axial color aberration of about 15 micrometers.

In some examples, the EFL, F/#, TTL 1004, lens width 1044, sensor 1008, and/or other camera 1000 and/or lens 1002 parameters may vary, and may be scaled or adjusted to meet various specifications of optical, imaging, and/or packaging constraints. Constraints for a camera system that may be specified as requirements for camera 1000 and/or lens 1002 and/or that may be varied for different camera system applications may include, but are not limited to, EFL, F/#, TTL 1004, lens stop 1022 location, DFOV, sensor 1008 size, imaging performance requirements, and packaging volume or size constraints.

In some examples, the camera 1000 may be adjustable, similar to as described above with reference to camera 100. For example, lens 1002 may include an adjustable lens stop 1022, and the F/# of camera 1000 may be dynamically varied within a range, e.g., camera 1000 may be used at faster (e.g., lower) F/# to increase the amount of light (brightness) captured by lens 1002, and/or camera 1000 may be used at slower (e.g., higher) F/# which may improve imaging quality performance.

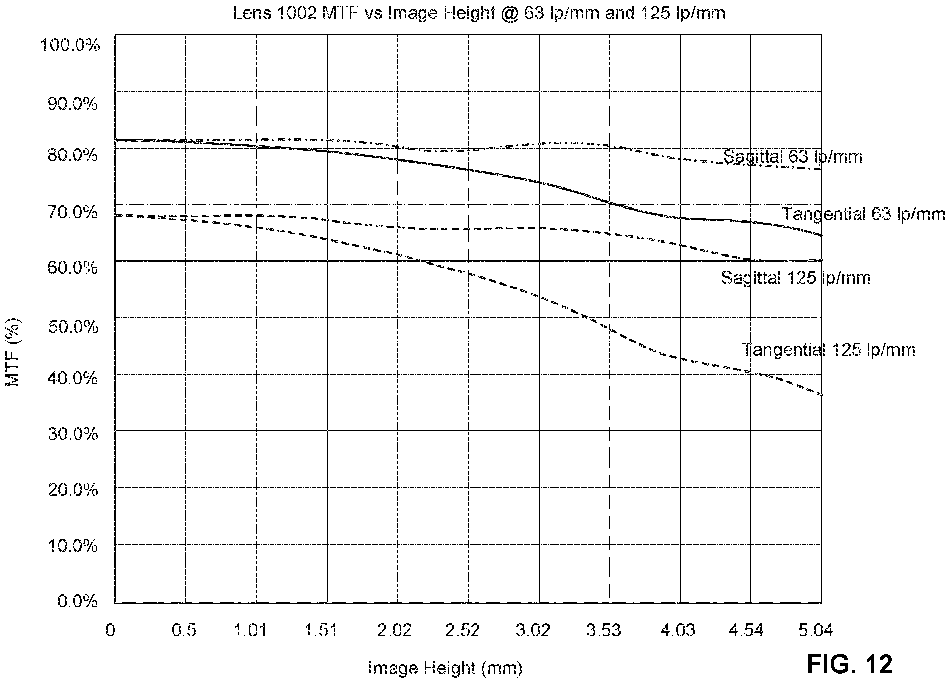

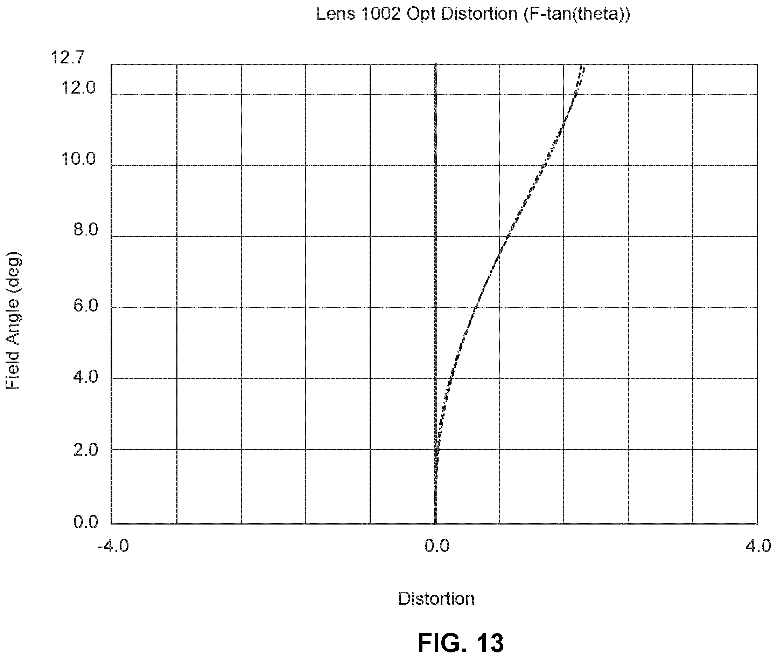

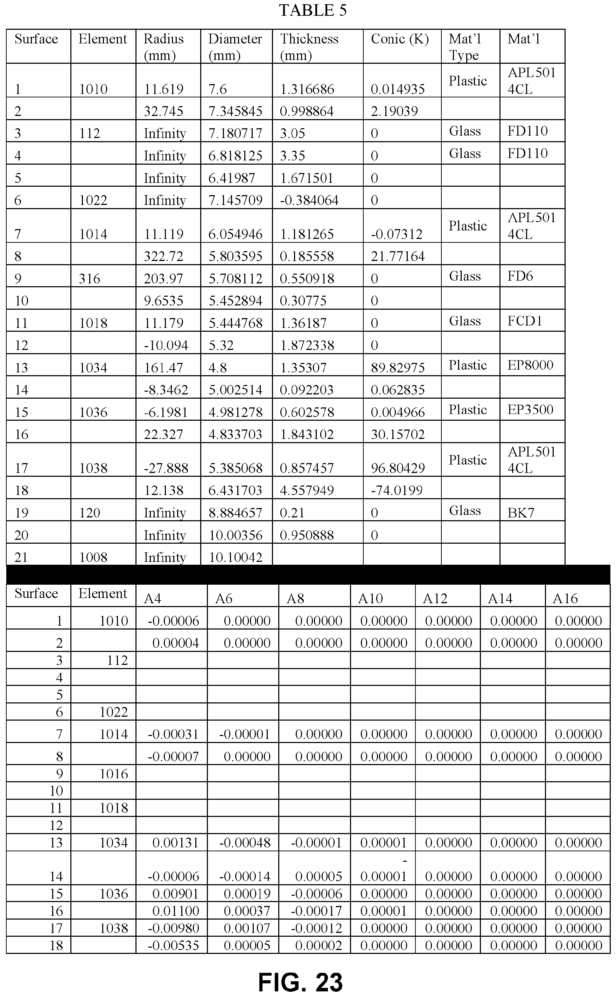

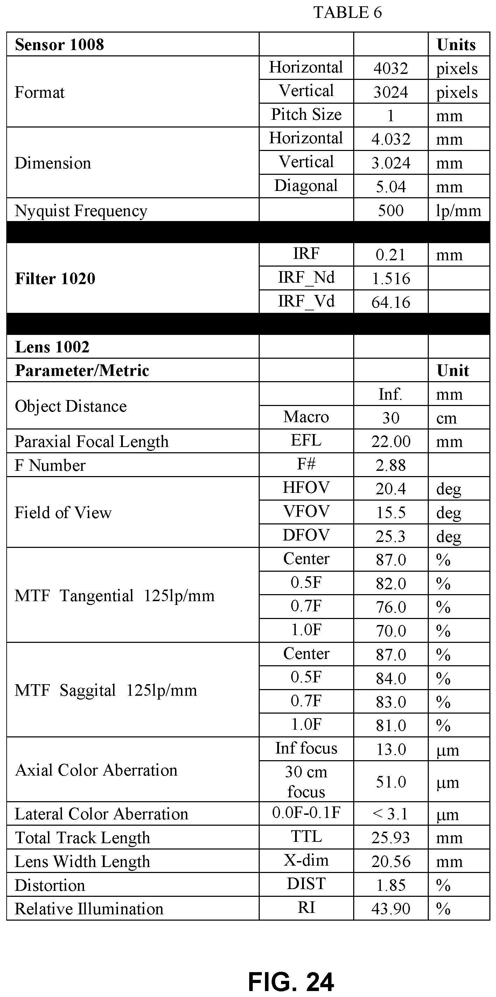

As discussed above, FIGS. 23 and 24 include Tables 5-6 which provide example values for various optical and physical parameters of camera 1000 as described in reference to FIG. 10. FIG. 11 is a plot of a through focus modulation transfer function (MTF) of the example camera 1000, FIG. 12 is a plot of MTF versus field of the example camera 1000, and FIG. 13 is a plot of a distortion of the example camera 1000.

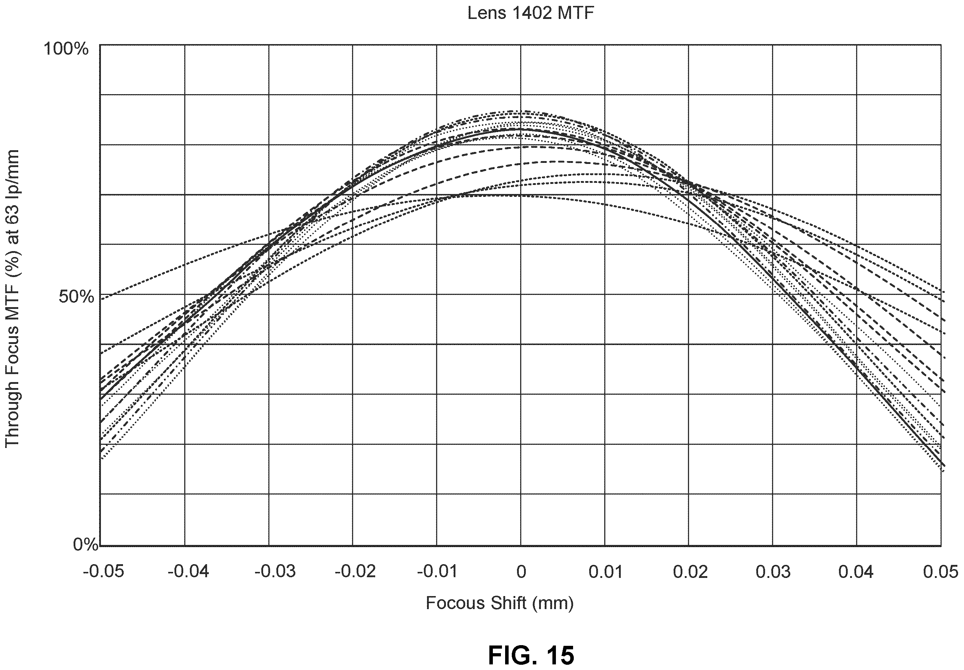

FIG. 14 is a cross-sectional diagram of an example camera 1400, in accordance with one or more aspects of the present disclosure. Camera 1400 of FIG. 14 may be substantially similar to camera 100 of FIG. 1, but has different lens parameters, e.g., lens 1402 has different lens design parameters from lens 102 and different optical performance. FIGS. 15-17 are plots illustrating lens performance and/or quality of camera 1400. Camera 1400 may include lens 1402 and sensor 1408, and lens 1402 may include a plurality of lens elements, e.g., two or more lens elements. Sensor 1408 may be substantially similar to sensor 108 (FIG. 1) described above and may be an example of sensor 108.

In the example shown, lens 1402 includes seven lens elements 1410, 1414, 1416, 1418, 1434, 1436, and 1438 arranged in order along optical axis 1406 from an object side to an image side, e.g., with lens element 1410 as the object side lens element and lens element 1438 as the image side lens element. Optical axis 1406 may be substantially similar to optical axis 106 (FIG. 1) described above and may be an example of optical axis 106. Lens elements 1410, 1414, 1416, 1418, 1434, 1436, and 1438 may be refractive lens elements. Lens element 1410 may be referred to as front lens element 1410. Lens elements 1414, 1416, 1418 and 1434, 1436, 1438 may be arranged in groups, e.g., with first lens element group 1440 including lens elements 1414, 1416, 1418 and second lens element group 1442 including lens elements 1434, 1436, 1438. The first lens element 1410 may be arranged on an object side of prism 1412, and the first lens element group 1440 and the second lens element group 1442, e.g., lens elements 1410, 1414, 1416, 1418, 1434, 1436, and 1438 may be arranged on an image side of prism 1412. Prism 1412 may be substantially similar to prism 112 (FIG. 1) described above and may be an example of prism 112. In the example shown, prism 1412 includes reflecting surface 1413, which may be substantially similar to reflecting surface 113 (FIG. 1). In some examples, first lens element group 1440 may comprise a negative optical power, and at least two of the lens elements of the second refractive lens element group 1442 each comprise a negative optical power.

Lens 1402 may have a total track length (TTL) 1404 extending from the front vertex, e.g., object side vertex along optical axis 1406, of front lens element 1410 to sensor 1408. Lens 1402 also may include lens stop 1422 arranged on an object side of lens element 1414, e.g., between prism 1412 and lens element 1414. In other examples, lens stop 1422 may be located anywhere within lens 1402, e.g., anywhere within TTL 1404. In some examples, lens stop 1422 may be a mechanical aperture comprising an opaque material and configured to have a clear aperture, and in other examples lens stop 1422 may be one of lens elements 1410, 1414-1438, prism 1412, or filter 1420. In some examples, lens stop 1422 may be substantially similar to lens stop 122 (FIG. 1) described above and may be an example of lens stop 122.

In some examples, lens 1402 may include filter 1420. Filter 1420 may be substantially similar to filter 120 (FIG. 1) described above and may be an example of filter 120. Parameters of lens 1402, e.g., the overall lens 1402 optical power, the optical powers of lens elements 1410, 1414-1438, the lens shapes, thicknesses, geometries, positions, materials, spacings, and the surface shapes of lens elements 1410, 1414-1438 may be selected, at least in part, to provide telephoto lens with a TTL 1404 of less than or equal to 29 millimeters (mm), a lens width 1444 of less than or equal to 24 mm, and an axial color aberration of less than 20 micrometers. Parameters of lens 1402 may also be selected to reduce, compensate, or correct for optical aberrations and lens artifacts and effects across the field of view including one or more of, but not limited to, defocus, spherical aberration, coma, astigmatism, distortion, the field curvature or Petzval sum, vignetting, lateral chromatic aberration, lens flare, or the like. Parameters of lens 1402 may also be selected to provide a high-resolution image configured for high resolution image capture, e.g., with a modulation transfer function (MTF) compatible with an 8 megapixel (MP), 12 MP, 16 MP, 48 MP or greater sensor 1408, as described above with reference to FIG. 1.

In some examples, lens elements 1410, 1414, and 1434-1438 may be comprised of a plastic material, such as a polycarbonate, a polyester, a polystyrene, an acrylic such as poly(methyl methacrylate) (PMMA), or any suitable polymer, an injection molded plastic material, and lens elements 1416, 1418 may comprise a glass material. For example, glass materials may have less dispersion than plastic materials, and using a glass material for one or more of the lens elements 1410, 1414-1438, e.g., lens elements 1416, 1418, may reduce the overall chromatic aberration (axial and/or lateral) of lens 1402. As described above, plastic materials may be easier to form and/or modify to achieve desired surface shapes, e.g., aspherical shapes, relative to glass materials. In some examples, the one or more glass lens elements of lens 1402, e.g., lens elements 1416, 1418 in the example shown, may be spherical lens. For example, lens elements 1416, 1418 may have surface shapes that are spherical and are non-aspheric, e.g., without an aspherical curvature. In some examples, lens 1402 may balance lens elements having complex curved shapes, e.g., aspherical surfaces, so as to reduce some aberrations and improve lens quality with lens elements having less complex shapes, e.g., spherical surfaces, but made of materials having less dispersion, so as to balance manufacturability and lens performance.

In some examples, lens elements 1410, 1414-1438 may include one or more coatings (e.g., anti-reflective coatings). In some examples, lens 1402 may include a cover glass (not shown). For example, a cover glass may be located on the object side of lens element 1410 and may be configured to protect lens 1402 from damage, e.g., environmental and/or contact with damaging materials. In some examples, the cover glass may be a hard glass, a glass and/or plastic with a hard coat, a sapphire, or any suitable material for protecting a surface of lens 1402 (e.g., the object side surface of lens element 1410). In some examples, the cover glass may have a small amount of optical power.

In the example shown, TTL 1404, lens width 1444, and the x-distance of lens 1402 may be defined similarly to TTL 104, lens width 144, and the x-distance of lens 102 described above. In some examples, the lens 1402 may have an EFL of less than or equal to 30 mm, or less than or equal to 25 mm, or less than or equal to 22 mm. Lens 1402 may have an F-number (F/#) between about 1.0 and 5.0, or between about 2.0 and 3.0, or between about 2.5 and 3.0. Note that the F/#, also referred to as the focal ratio, may be defined by EFL/D, where D is the diameter of the entrance pupil, which is the image of lens stop 1422 as seen from the object side of lens 1402. In the example shown, lens 1402 has an EFL of about 22 mm, an F/# of about 2.88, a diagonal field of view (DFOV) of about 25 degrees for focus at infinity and a DFOV of about 15 degrees for focus at 30 cm, a TTL 1404 of about 26.88 mm, a lens width 1444 of about 21.54 mm, and an axial color aberration of about 15 micrometers.

In some examples, the EFL, F/#, TTL 1404, lens width 1444, sensor 1408, and/or other camera 1400 and/or lens 1402 parameters may vary, and may be scaled or adjusted to meet various specifications of optical, imaging, and/or packaging constraints. Constraints for a camera system that may be specified as requirements for camera 1400 and/or lens 1402 and/or that may be varied for different camera system applications may include, but are not limited to, EFL, F/#, TTL 1404, lens stop 1422 location, DFOV, sensor 1408 size, imaging performance requirements, and packaging volume or size constraints.

In some examples, the camera 1400 may be adjustable, similar to as described above with reference to camera 100. For example, lens 1402 may include an adjustable lens stop 1422, and the F/# of camera 1400 may be dynamically varied within a range, e.g., camera 1400 may be used at faster (e.g., lower) F/# to increase the amount of light (brightness) captured by lens 1402, and/or camera 1400 may be used at slower (e.g., higher) F/# which may improve imaging quality performance.

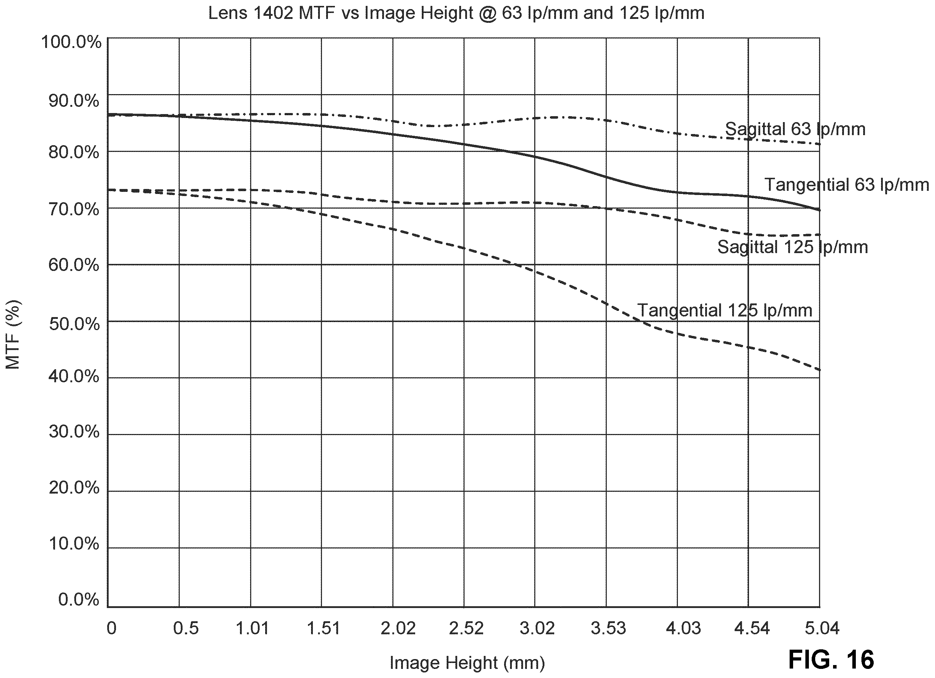

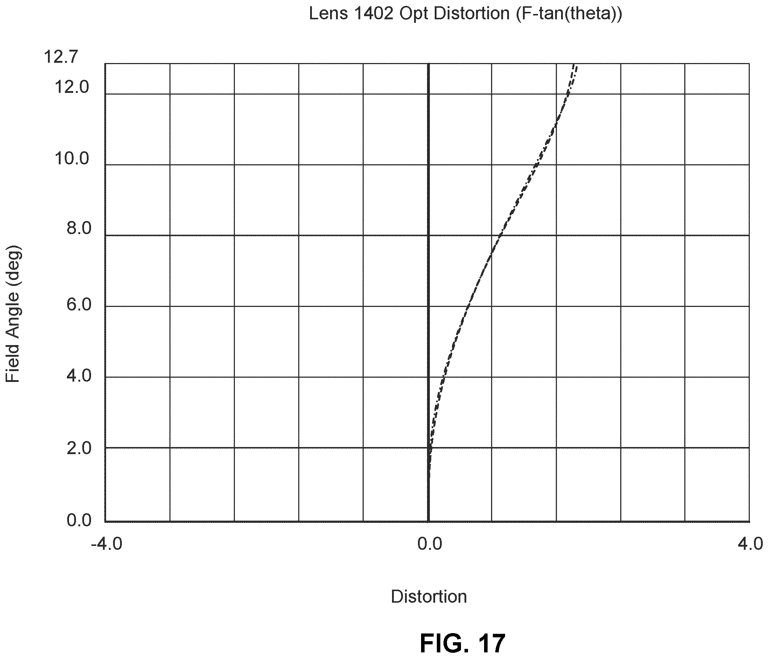

As described above, Tables 7-8 below provide example values for various optical and physical parameters of camera 1400 as described in reference to FIG. 14. FIG. 15 is a plot of a through focus modulation transfer function (MTF) of the example camera 1400, FIG. 16 is a plot of MTF versus field of the example camera 1400, and FIG. 17 is a plot of a distortion of the example camera 1400.

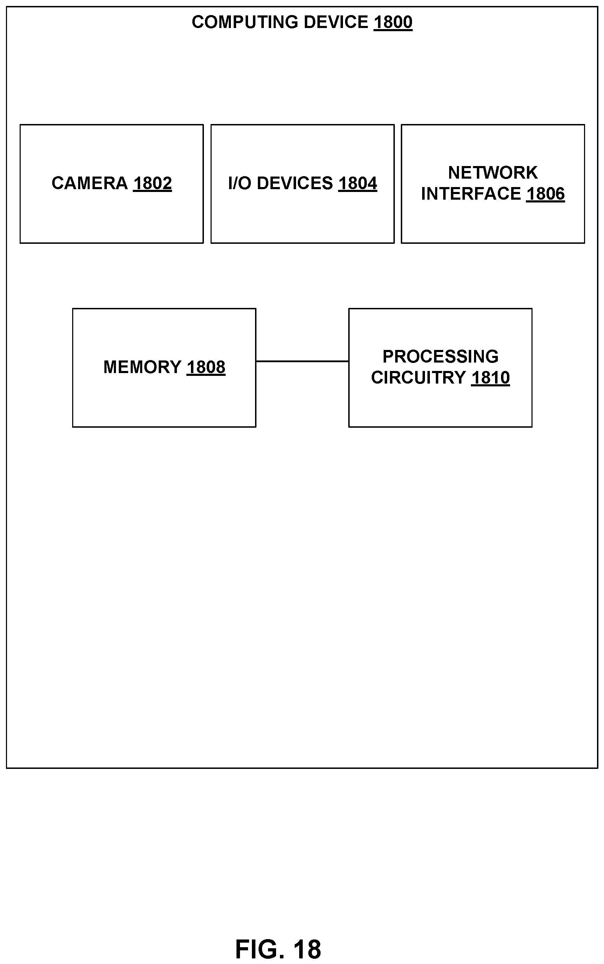

FIG. 18 is an example computing system 1800 that may be used with a camera 1802 including lens 102, 602, 1002, and/or 1402, in accordance with one or more aspects of the present disclosure. Camera 1802 may be an example of any of camera 100, camera 600, camera 1000, and/or camera 1400. Computing system 1800 may implement methods for controlling operations of camera 1802 using lens 102, 602, 1002, or 1402, and/or for performing image processing of images captured with the camera 1802. In some examples, computing system 1800 may be any of various types of devices, including, but not limited to, a personal computer system, desktop computer, laptop, notebook, tablet or pad device, slate, or netbook computer, mainframe computer system, handheld computer, workstation, network computer, a camera, a set top box, a mobile device, a wireless phone, a smartphone, a consumer device, video game console, handheld video game device, application server, storage device, a television, a video recording device, a peripheral device such as a switch, modem, router, or in general any type of computing or electronic device.

In the example shown, computing system 1800 may include processing circuitry 1810 (e.g., one or more processors) coupled to a memory 1808. computing system 1800 also may include a network interface 1806, input/output devices 1804, e.g., a cursor control device, mouse, touchpad, trackball, a keyboard, a display, or the like. Computing system 1800 also may include one or more cameras 1802 which may be substantially similar to any or all of cameras 100, 600, 1000, and 1400 described above.

Memory 1808 may be configured to store program instructions and/or data accessible by processing circuitry 1810. Memory 1808 may be implemented using any suitable memory technology, such as static random access memory (SRAM), synchronous dynamic RAM (SDRAM), nonvolatile/Flash-type memory, or any other type of memory. Program instructions may be configured to implement various interfaces, methods and/or data for controlling operations of camera 1802 and for capturing and processing images with camera 1802 or other methods or data, for example interfaces and methods for capturing, displaying, processing, and storing images captured with camera 1802. In some examples, program instructions and/or data may be received, sent or stored upon different types of computer-accessible media or on similar media separate from system memory 1808 or computing system 1800.

Network interface 1806 may be configured to allow data to be exchanged between computing system 1800 and other devices attached to a network (e.g., carrier or agent devices) or between nodes of computing system 1800. Network interface 1806 may include one or more networks including but not limited to Local Area Networks (LANs) (e.g., an Ethernet or corporate network), Wide Area Networks (WANs) (e.g., the Internet), wireless data networks, some other electronic data network, or some combination thereof. Network interface 1806 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 1804 may include one or more display terminals, keyboards, keypads, touchpads, scanning devices, voice or optical recognition devices, or any other devices suitable for entering or accessing data by computing system 1800. Multiple input/output devices 1804 may be present in computing system 1800 or may be distributed on various nodes of computing system 1800. In some examples, similar input/output devices 1804 may be separate from computing system 1800 and may interact with one or more nodes of computing system 1800 through a wired or wireless connection, such as over network interface 1806.

In the example shown, memory 1808 may include program instructions which may be processor-executable to implement any element or action to support camera 1802, including but not limited to image processing software and interface software for controlling camera 1802. In some examples, images captured by camera 1802 may be stored to memory 1808. In addition, metadata for images captured by camera 1802 may be stored using memory 1808.

Computing system 1800 and devices described herein may include any combination of hardware or software that can perform the indicated functions, including computers, network devices, Internet appliances, PDAs, wireless phones, pagers, video or still cameras, and the like. Computing system 1800 may also be connected to other devices that are not illustrated, or instead may operate as a stand-alone system. In addition, the functionality provided by the illustrated components may, in some examples, be combined in fewer components or distributed in additional components. Similarly, in some examples, the functionality of some of the illustrated components may not be provided and/or other additional functionality may be available.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, may include compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

This disclosure includes the following examples:
Example 1: A lens including: a plurality of optical elements arranged along an optical axis, wherein the plurality of optical elements includes, in order from an object side to an image side of the lens: a first refractive lens element; a prism; a first refractive lens element group including, in order from the object side to the image side of the lens: a lens element including a plastic; and at least two glass lens elements including a glass; and a second refractive lens element group, wherein movement of the second lens element group along the optical axis as a group changes a focus of the lens.
Example 2: The lens of example 1, wherein the first refractive lens element and the prism are configured to rotate together in a pitch direction or a roll direction together to perform optical image stabilization.
Example 3: The lens of example 1 or example 2, wherein the at least two glass lens elements include one or more spherically curved surfaces, and wherein the at least two glass lens elements are without an aspherical curvature.
Example 4: The lens of any one of examples 1 through 3, wherein a total track length of the lens is less than or equal to 29 millimeters (mm).
Example 5: The lens of any one of examples 1 through 4, wherein the lens includes a width in a direction perpendicular to the optical axis that is less than or equal to 24 mm.
Example 6: The lens of any one of examples 1 through 5, wherein the lens is configured to image a scene having an axial color aberration of less than 20 micrometers.
Example 7: The lens of any one of examples 1 through 6, wherein at least one of the lens elements of the first refractive lens element group includes a negative optical power, wherein at least two of the lens elements of the second refractive lens element group each include a negative optical power.
Example 8: The lens of any one of examples 1 through 7, wherein the second refractive lens element group includes a lens element including a plastic.
Example 9: A camera including: a lens including: a plurality of optical elements arranged along an optical axis, wherein the plurality of optical elements includes, in order from an object side to an image side of the lens: a first refractive lens element; a prism; a first refractive lens element group including: a lens element including a plastic; and at least two glass lens elements including a glass; and a second refractive lens element group; and a sensor disposed at an image plane of the lens.
Example 10: The camera of example 9, wherein the first refractive lens element and the prism are configured to rotate together in a pitch direction or a roll direction together to perform optical image stabilization.
Example 11: The camera of example 9 or example 10, wherein the at least two glass lens elements include one or more spherically curved surfaces, and wherein the at least two glass lens elements are without an aspherical curvature.
Example 12: The camera of any one of examples 9 through 11, wherein a total track length of the lens is less than or equal to 29 millimeters (mm).
Example 13: The camera of any one of examples 9 through 12, wherein the lens includes a width in a direction perpendicular to the optical axis that is less than or equal to 24 mm.
Example 14: The camera of any one of examples 9 through 13, wherein the lens is configured to image a scene having an axial color aberration of less than 20 micrometers.
Example 15: The camera of any one of examples 9 through 14, wherein at least one of the lens elements of the first refractive lens element group includes a negative optical power, wherein at least two of the lens elements of the second refractive lens element group each include a negative optical power.
Example 16: The camera of any one of examples 9 through 15, wherein the second refractive lens element group includes a lens element including a plastic.
Example 17: The camera of any one of examples 9 through 16, wherein the lens element of the first refractive lens element group including the plastic is positioned on an object side of the lens from the at least two glass lens elements.
Example 18: The camera of any one of examples 9 through 17, wherein movement of the second lens element group along the optical axis as a group changes a focus of the lens.
Example 19: A device including: a processor; a camera; and a memory including instructions executable by the processor to control operations of the cameras, wherein the camera includes: a lens including: a plurality of optical elements arranged along an optical axis, wherein the plurality of optical elements includes, in order from an object side to an image side of the lens: a first refractive lens element; a prism; a first refractive lens element group including, in order from the object side to the image side of the lens: a lens element including a plastic; and at least two glass lens elements including a glass; and a second refractive lens element group, wherein movement of the second lens element group along the optical axis as a group changes a focus of the lens; and a sensor disposed at an image plane of the lens.
Example 20: The device of example 19, wherein the first refractive lens element and the prism are configured to rotate together in a pitch direction or a roll direction together to perform optical image stabilization, and wherein the lens is configured to image a scene having an axial color aberration of less than 20 micrometers.

Various examples of the disclosure have been described. Any combination of the described systems, operations, or functions is contemplated. These and other examples are within the scope of the following claims.

## Claims

1. A lens comprising:
a plurality of optical elements arranged along an optical axis, wherein the plurality of optical elements comprises, in order from an object side to an image side of the lens:
a first refractive lens element;
a prism;
a first refractive lens element group comprising, in order from the object side to the image side of the lens:
a lens element comprising a plastic; and
at least two glass lens elements comprising a glass; and
a second refractive lens element group, wherein movement of the second lens element group along the optical axis as a group changes a focus of the lens.

2. The lens of claim 1, wherein the first refractive lens element and the prism are configured to rotate together in a pitch direction or a roll direction together to perform optical image stabilization.

3. The lens of claim 1 or claim 2, wherein the at least two glass lens elements comprise one or more spherically curved surfaces, and wherein the at least two glass lens elements are without an aspherical curvature.

4. The lens of any one of claims 1 through 3, wherein a total track length of the lens is less than or equal to 29 millimeters (mm).

5. The lens of any one of claims 1 through 4, wherein the lens comprises a width in a direction perpendicular to the optical axis that is less than or equal to 24 mm.

6. The lens of any one of claims 1 through 5, wherein the lens is configured to image a scene having an axial color aberration of less than 20 micrometers.

7. The lens of any one of claims 1 through 6, wherein at least one of the lens elements of the first refractive lens element group comprises a negative optical power, wherein at least two of the lens elements of the second refractive lens element group each comprise a negative optical power.

8. The lens of any one of claims 1 through 7, wherein the second refractive lens element group comprises a lens element comprising a plastic.

9. A camera comprising:
a lens comprising:
a plurality of optical elements arranged along an optical axis, wherein the plurality of optical elements comprises, in order from an object side to an image side of the lens:
a first refractive lens element;
a prism;
a first refractive lens element group comprising:
a lens element comprising a plastic; and
at least two glass lens elements comprising a glass; and
a second refractive lens element group; and
a sensor disposed at an image plane of the lens.

10. The camera of claim 9, wherein the first refractive lens element and the prism are configured to rotate together in a pitch direction or a roll direction together to perform optical image stabilization.

11. The camera of claim 9 or claim 10, wherein the at least two glass lens elements comprise one or more spherically curved surfaces, and wherein the at least two glass lens elements are without an aspherical curvature.

12. The camera of any one of claims 9 through 11, wherein a total track length of the lens is less than or equal to 29 millimeters (mm).

13. The camera of any one of claims 9 through 12, wherein the lens comprises a width in a direction perpendicular to the optical axis that is less than or equal to 24 mm.

14. A device comprising:
a processor;
a camera; and
a memory comprising instructions executable by the processor to control operations of the cameras,
wherein the camera comprises:
a lens of any one of claims 1 through 8; and
a sensor disposed at an image plane of the lens.

15. The device of claim 14, wherein the first refractive lens element and the prism are configured to rotate together in a pitch direction or a roll direction together to perform optical image stabilization, and wherein the lens is configured to image a scene having an axial color aberration of less than 20 micrometers.

## Amended claims

### Amended claims in accordance with Rule 137(2) EPC.

1. A lens comprising:
a plurality of optical elements arranged along an optical axis, wherein the plurality of optical elements comprises, in order from an object side to an image side of the lens:
a first refractive lens element;
a prism;
an aperture stop;
a first refractive lens element group comprising, in order from the object side to the image side of the lens:
a lens element comprising a plastic; and
at least two glass lens elements comprising a glass; and
a second refractive lens element group, wherein movement of the second lens element group along the optical axis as a group changes a focus of the lens,
wherein the first refractive lens element group has a negative optical power, and wherein at least one of the lens elements of the first refractive lens element group comprises a negative optical power, and wherein at least two of the lens elements of the second refractive lens element group each comprise a negative optical power.

2. The lens of claim 1, wherein the first refractive lens element and the prism are configured to rotate together in a pitch direction or a roll direction together to perform optical image stabilization.

3. The lens of claim 1 or claim 2, wherein the at least two glass lens elements comprise one or more spherically curved surfaces, and wherein the at least two glass lens elements are without an aspherical curvature.

4. The lens of any one of claims 1 through 3, wherein a total track length of the lens is less than or equal to 29 millimeters (mm).

5. The lens of any one of claims 1 through 4, wherein the lens comprises a width in a direction perpendicular to the optical axis that is less than or equal to 24 mm.

6. The lens of any one of claims 1 through 5, wherein the lens is configured to image a scene having an axial color aberration of less than 20 micrometers.

7. The lens of any one of claims 1 through 6, wherein the second refractive lens element group comprises a lens element comprising a plastic.

8. A camera comprising:
a lens comprising:
a plurality of optical elements arranged along an optical axis, wherein the plurality of optical elements comprises, in order from an object side to an image side of the lens:
a first refractive lens element;
a prism;
an aperture stop;
a first refractive lens element group comprising:
a lens element comprising a plastic; and
at least two glass lens elements comprising a glass; and
a second refractive lens element group; and
a sensor disposed at an image plane of the lens.

9. The camera of claim 8, wherein the first refractive lens element and the prism are configured to rotate together in a pitch direction or a roll direction together to perform optical image stabilization.

10. The camera of claim 8 or claim 9, wherein the at least two glass lens elements comprise one or more spherically curved surfaces, and wherein the at least two glass lens elements are without an aspherical curvature.

11. The camera of any one of claims 8 through 10, wherein a total track length of the lens is less than or equal to 29 millimeters (mm).

12. The camera of any one of claims 8 through 11, wherein the lens comprises a width in a direction perpendicular to the optical axis that is less than or equal to 24 mm.

13. A device comprising:
a processor;
a camera; and
a memory comprising instructions executable by the processor to control operations of the cameras,
wherein the camera comprises:
a lens of any one of claims 1 through 7; and
a sensor disposed at an image plane of the lens.

14. The device of claim 13, wherein the first refractive lens element and the prism are configured to rotate together in a pitch direction or a roll direction together to perform optical image stabilization, and wherein the lens is configured to image a scene having an axial color aberration of less than 20 micrometers.
